(19) Europäisches Patentamt
European Patent Office
Office européen des brevets

(11) **EP 3 374 699 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.03.2026   Patentblatt 2026/10**

(45) Hinweis auf die Patenterteilung:
**23.09.2020   Patentblatt 2020/39**

(21) Anmeldenummer: **16809630.3**

(22) Anmeldetag: **26.10.2016**

(51) Internationale Patentklassifikation (IPC):
**F24D 19/10** (2006.01)    **F04D 15/00** (2006.01)

(52) Gemeinsame Patentklassifikation (CPC):
**F24D 19/1012; F04D 13/12; F04D 15/0066;**
F24D 2220/0207; Y02B 30/70

(86) Internationale Anmeldenummer:
**PCT/EP2016/001776**

(87) Internationale Veröffentlichungsnummer:
**WO 2017/080632 (18.05.2017 Gazette 2017/20)**

(54) **VERFAHREN ZUR REGELUNG EINER KREISELPUMPE SOWIE ZUGEHÖRIGES PUMPENSYSTEM**

METHOD FOR CONTROLLING A CENTRIFUGAL PUMP, AND ASSOCIATED PUMP SYSTEM

PROCÉDÉ DE RÉGULATION D'UNE POMPE CENTRIFUGE AINSI QUE SYSTÈME DE POMPE AFFÉRENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **09.11.2015   DE 102015014378**

(43) Veröffentlichungstag der Anmeldung:
**19.09.2018   Patentblatt 2018/38**

(73) Patentinhaber: **WILO SE**
**44263 Dortmund (DE)**

(72) Erfinder: **SCHMIED, Stephan**
**59174 Kamen (DE)**

(74) Vertreter: **Cohausz Hannig Borkowski Wißgott Patentanwaltskanzlei GbR**
**Grafenberger Allee 337a**
**40235 Düsseldorf (DE)**

(56) Entgegenhaltungen:
EP-A1- 2 874 039          WO-A1-99/01665
WO-A2-2010/015318    DE-A1- 102009 017 423
DE-A1- 19 912 588

## EP 3 374 699 B2

**Beschreibung**

Die Erfindung betrifft ein Verfahren zur Regelung wenigstens einer ersten Umwälzpumpe einer Heizungs- oder Kühlungsanlage, die einen Primärkreis und einen mit diesem an einer Übergabestelle gekoppelten Sekundärkreis aufweist, wobei die erste Umwälzpumpe ein Heiz- oder Kühlmedium im Primärkreis fördert und im Sekundärkreis zumindest eine drehzahlgeregelte, zweite Umwälzpumpe liegt, die ein Heiz- oder Kühlmedium in zumindest einem Teilbereich des Sekundärkreises fördert.

Ein Verfahren gemäß dem Oberbegriff des Anspruchs 1 ist aus der Patentschrift DE 10 2009 017 423 A1 bekannt.

In Anlagen zur Beheizung und/oder Kühlung von Gebäuden mit flüssigen Wärmeträgern ist es üblich, die Verbraucher auf mehrere Verbraucherkreise aufzuteilen. Diese Aufteilung kann z.B. getrennt nach Gebäudeteilen oder getrennt nach unterschiedlichen Verbraucherarten erfolgen. Verbraucherarten sind beispielsweise Heizkörper oder Heiz- bzw. Kühlflächen bei Fussbodenheizungen oder Deckenheizungen bzw. Kühldecken. Hinsichtlich der Gebäudeteile kann eine Aufteilung beispielsweise nach Wohnungen oder Etagen erfolgen. Jeder Verbraucherkreis umfasst dann einen oder mehr Verbraucher sowie eine diesen oder diese versorgende Verbraucherkreispumpe. Zudem ist meist in jedem Verbraucherkreis zumindest einem Verbraucher ein regelndes Stellglied angeordnet, das den Volumenstrom durch den oder die entsprechenden Verbraucher einstellt. Alternativ kann die Regelung des Volumenstroms durch die Verbraucher direkt durch Drehzahlregelung der Pumpe im Verbraucherkreis erfolgen.

Die Verbraucherkreise werden in der Regel über gemeinsame Versorgungsleitungen, d.h. eine gemeinsame Vorlaufleitung und Rücklaufsammelleitung mit wenigstens einem Wärme- oder Kälteerzeuger eines oder mehrerer Erzeugerkreise verbunden. Bei kombinierten Anlagen, die sowohl Heizen als auch Kühlen können, sind die Verbraucher entsprechend mit zumindest einem Wärmeerzeuger und zumindest einem Kälteerzeuger jeweils eines eigenen Erzeugerkreises verbunden, wobei wahlweise der Erzeugerkreis mit dem einen oder anderen Erzeugertyp in Betrieb ist.

Der Erzeugerkreis oder die Erzeugerkreise sind häufig mittels einer Übergabestelle an die Verbraucherkreise gekoppelt. Eine solche Übergabestelle kann beispielsweise eine hydraulische Weiche, ein Wärmetauscher oder eine Überströmleitung sein, wobei die verschiedenen Übergabestellen unterschiedliche Eigenschaften haben und verschiedene Anforderungen erfüllen. Das Ankoppeln kann direkt erfolgen oder alternativ über einen Zubringerkreis, wenn beispielsweise aufgrund der Entfernung zwischen Erzeugerkreis und Verbraucherkreis große Druckverluste überwunden werden müssen. Dadurch ergeben sich dann zwei Übergabestellen, eine erste Übergabestelle zwischen Erzeugerkreis(en) und Zubringerkreis und eine zweite Übergabestelle zwischen Zubringerkreis und Verbraucherkreisen. Aus Sicht der Übergabestelle zu den Verbraucherkreisen sind der oder die Erzeugerkreis(e) bzw. der Zubringerkreis auf der Primärseite, wohingegen die Verbraucherkreise auf der Sekundärseite der Übergabestelle liegen.

Im Allgemeinen gilt, dass die benötigten Volumenströme in der Anlage durch die Verbraucher definiert werden. Denn in der Regel wird der Volumenstrom in einem Verbraucherkreis über die den einzelnen Verbrauchern zugeordneten Stellglieder eingeregelt. Um den Betrieb der Verbraucherkreispumpen daran sinnvoll anzupassen, werden drehzahlregelbare Kreiselpumpe mit einer Pumpenelektronik eingesetzt, bei denen als bewährte Regelungsarten eine sogenannte Konstantdruckregelung, auch $\Delta$p-c Regelung genannt, und eine Variabeldruckregelung, sogenannte $\Delta$p-v Regelung zur Verfügung stehen, welche in der Pumpenelektronik der Verbraucherkreispumpen ausgewählt werden können. Alternativ zur indirekten Beeinflussung der Pumpendrehzahl über Stellglieder, kann die Drehzahl der Kreiselpumpe direkt, z.B. durch eine Temperaturregelung, Feuchteregelung oder Volumenstromregelung beeinflusst werden. Dagegen ist eine bedarfsabhängige Regelung der primärseitig der Übergabestelle zum Verbraucherkreis angeordneten Pumpen nicht etabliert. Bekannt sind verschiedene Verfahren, die primärseitige Pumpe entsprechend einer oder mehrerer Temperaturdifferenzen an der hydraulischen Weiche bzw. am Wärmeübertrager zu regeln. Diese Verfahren sind mess- und regelungstechnisch aufwendig und/oder ermöglichen lediglich eine unvollständige Anpassung an den Bedarf.

Es ist daher Aufgabe der vorliegenden Erfindung, eine bedarfsabhängige Regelung für eine drehzahlregelbare Kreiselpumpe bereitzustellen, die primärseitig einer Übergabestelle zu Verbraucherkreisen in einer Heizungs- oder Kühlanlage angeordnet ist.

Diese Aufgabe wird durch das Verfahren mit den Merkmalen des Anspruch 1 gelöst. Vorteilhafte Weiterbildungen sind in den Unteransprüchen angegeben und werden nachfolgend beschrieben.

Erfindungsgemäß wird ein Verfahren zur Regelung wenigstens einer ersten Umwälzpumpe einer Heizungs- oder Kühlungsanlage vorgeschlagen, die einen Primärkreis und einen mit diesem an einer Übergabestelle gekoppelten Sekundärkreis aufweist, wobei die erste Umwälzpumpe ein Heiz- oder Kühlmedium im Primärkreis fördert und im Sekundärkreis zumindest eine drehzahlgeregelte, zweite Umwälzpumpe liegt, die ein Heiz- oder Kühlmedium in zumindest einem Teilbereich des Sekundärkreises fördert, wobei der Volumenstrom der ersten Umwälzpumpe in funktionaler Abhängigkeit von dem Volumenstrom des Sekundärkreises hinter der Übergabestelle geregelt wird.

Durch eine derartige Volumenstromregelung in Abhängigkeit des Volumenstroms der Sekundärseite lässt sich eine verbrauchsabhängige und damit energieeffiziente Regelung der auf der Primärseite liegenden Pumpe realisieren. Der Primärvolumenstrom wird dadurch einerseits ausreichend hoch eingestellt, um den Verbrauchern die gewünschte Wärmeleistung bereitzustellen, und andererseits nicht unnötig hoch sein, um Energie zu sparen.

Die erfindungsgemäße Regelung lässt sich auf sämtliche Heizungs- oder Kühlanlagen anwenden, die einen durch zumindest eine Übergabestelle gekoppelten Primär- und Sekundärkreis haben. Dabei entspricht der Primärkreis allgemein der Erzeugerseite, der Sekundärkreis allgemein der Verbraucherseite. Der Primärkreis kann einen oder mehrere Erzeugerkreise umfassen, wobei der Sekundärkreis mehrere Verbraucherkreise umfasst. Primär- und Sekundärkreis können über die Übergabestelle direkt miteinander gekoppelt sein. Alternativ kann jedoch auch ein Zubringerkreis zwischen Primär- und Sekundärkreis liegen, der mit jeweils einer Übergabestelle an den Primärkreis und den Sekundärkreis gekoppelt ist.

Entsprechend dieser Vielzahl von Anlagentopologien kann das erfindungsgemäße Verfahren auf verschiedene Weise Anwendung finden. So kann allein im Hinblick auf die Anlagentopologie

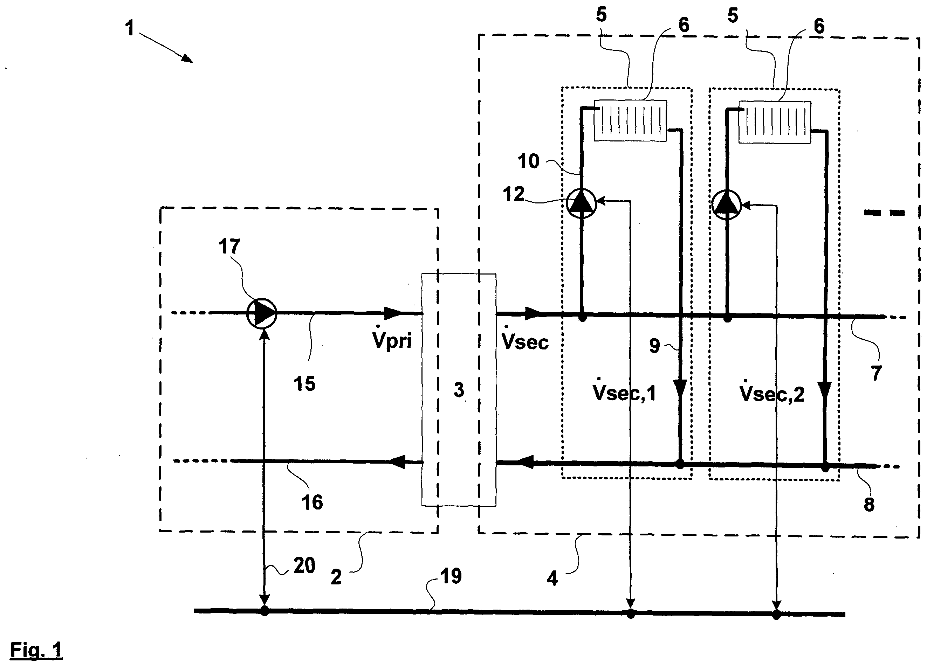

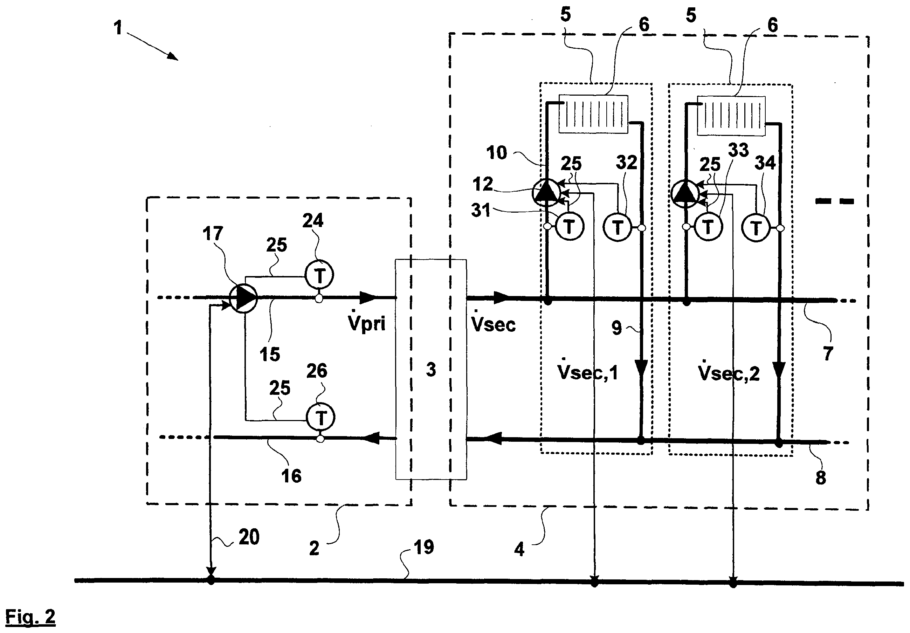

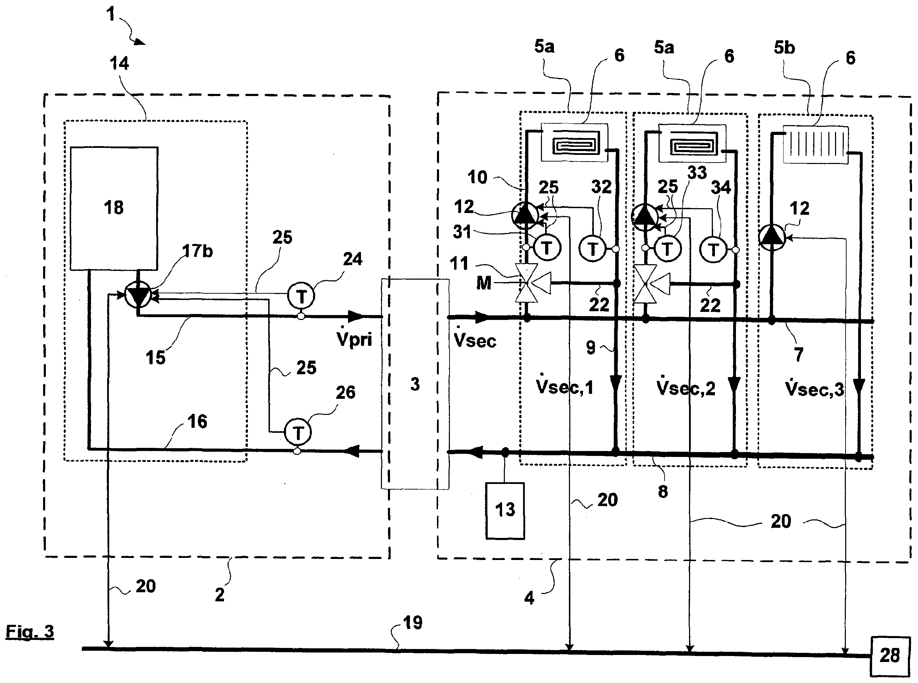

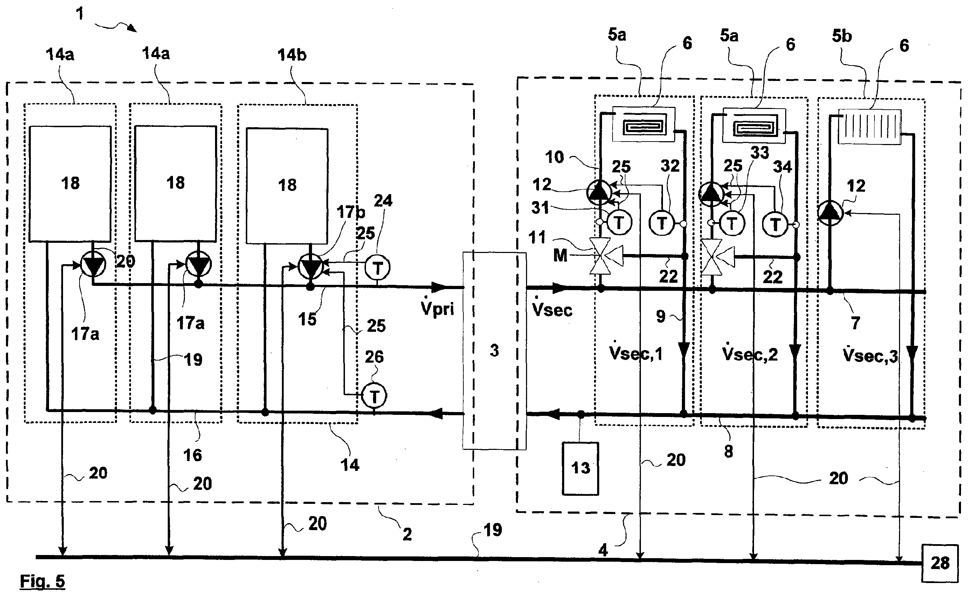

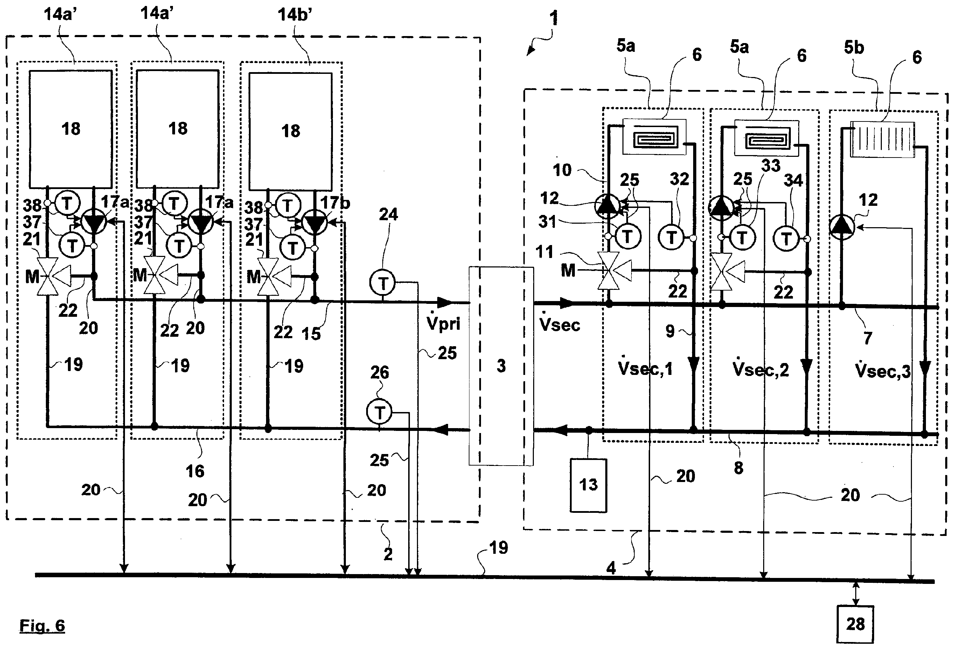

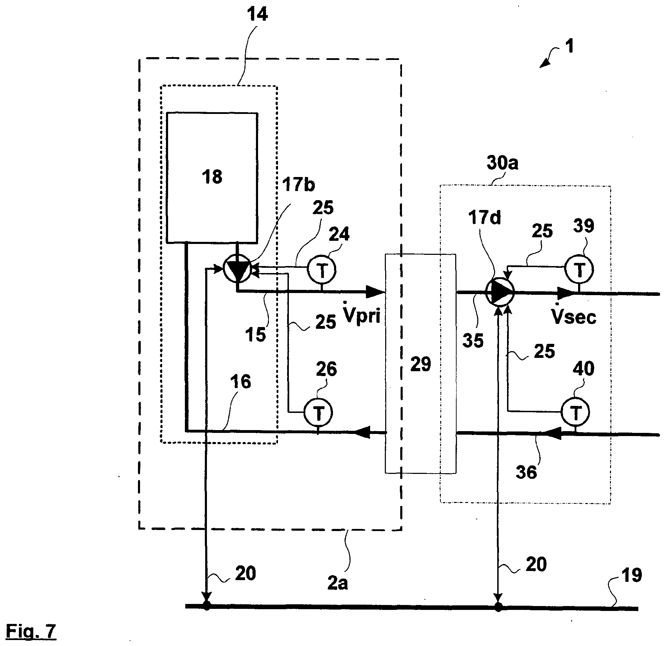

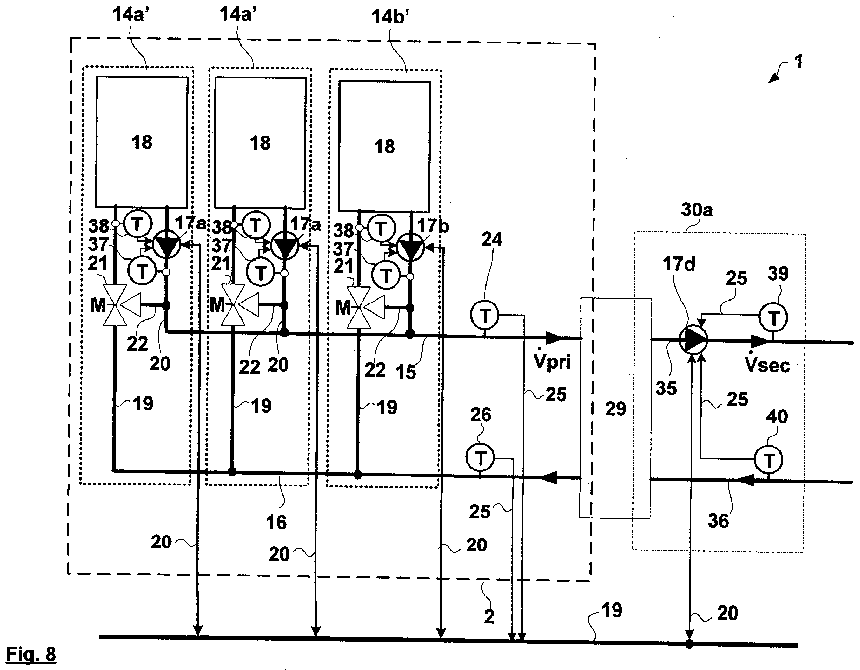

- in einer nicht zur Erfindung gehörenden ersten Ausführungsvariante eine Erzeugerpumpe mit einer Verbraucherpumpe gekoppelt sein,
- in einer zweiten Ausführungsvariante eine Erzeugerpumpe mit zwei oder mehr parallelen Verbraucherpumpen gekoppelt sein (siehe Figur 3),
- in einer dritten Ausführungsvariante zwei oder mehr parallele Erzeugerpumpe mit zwei oder mehr parallelen Verbraucherpumpen gekoppelt sein (siehe Figur 5, 6),
- in einer nicht zur Erfindung gehörenden vierten Ausführungsvariante eine Zubringerpumpe mit einer Verbraucherpumpe gekoppelt sein,
- in einer fünften Ausführungsvariante eine Zubringerpumpe mit zwei oder mehr parallelen Verbraucherpumpen gekoppelt sein (siehe Figur 1, 2),
- in einer sechsten Ausführungsvariante eine Erzeugerpumpe mit einer Zubringerpumpe gekoppelt sein (siehe Figur 7),
- in einer siebten Ausführungsvariante zwei oder mehr parallele Erzeugerpumpen mit einer Zubringerpumpen gekoppelt sein (siehe Figur 8).

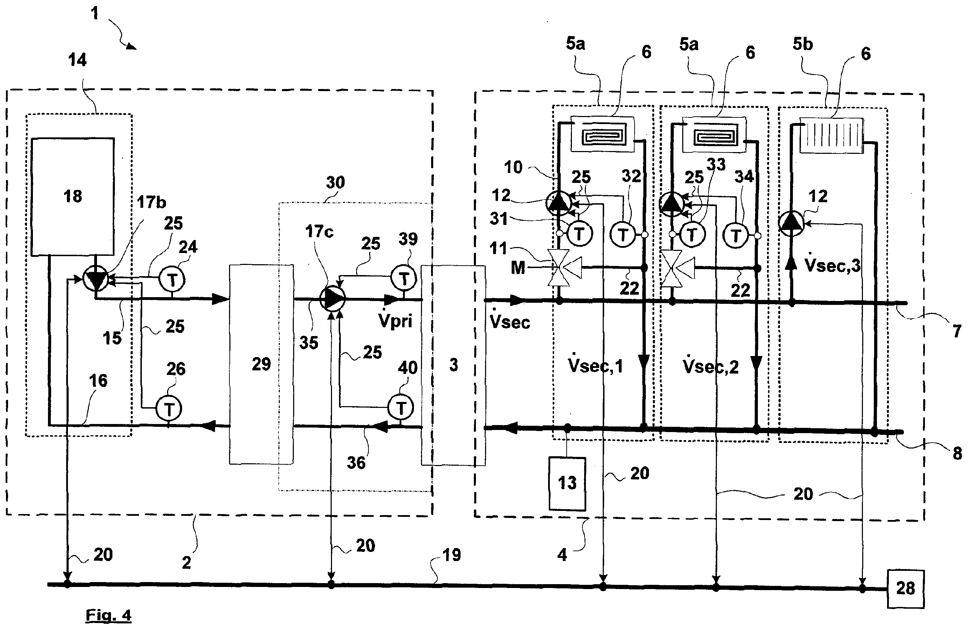

Da bei den Ausführungsvarianten vier bis sieben immer nur eine Hälfte der Anlage betrachtet wird, sind entsprechend weitere Ausführungsvarianten durch eine Kombination der Varianten vier und sechs, vier und sieben, fünf und sechs (siehe Figur 4) sowie fünf und sieben durch die erfindungsgemäße Volumenstromregelung abgedeckt. Nachfolgend werden die verschiedenen Varianten beschrieben.

Erfindungsgemäß wird der Volumenstrom der ersten Umwälzpumpe in funktionaler Abhängigkeit von dem Volumenstrom des Sekundärkreises hinter der Übergabestelle geregelt. Dies lässt sich mathematisch durch $\dot{V}_{soll} = f(\dot{V}_{sec})$ beschreiben, wobei $\dot{V}_{soll}$ der einzuregelnde Volumenstrom der ersten Umwälzpumpe, $\dot{V}_{sec}$ der Volumenstrom des Sekundärkreises hinter der Übergabestelle und f eine mathematische Funktion ist, die einem sekundärseitigen Volumenstrom $\dot{V}_{sec}$ einen entsprechenden Sollvolumenstrom $\dot{V}_{soll}$ für die Umwälzpumpe zuordnet. Ist primärseitig nur eine erste Umwälzpumpe vorhanden (erste, zweite, vierte, fünfte, sechste Ausführungsvariante), entspricht der Sollvolumenstrom dem primärseitigen Volumenstrom $\dot{V}_{pri}$, so dass dann $\dot{V}_{pri} = f(\dot{V}_{sec})$ ist. Sind primärseitig zwei oder mehr erste Umwälzpumpen vorhanden (Ausführungsvarianten drei und sieben), entspricht der Sollvolumenstrom einem erzeugerspezifischen Volumenstrom $\dot{V}_{pri,i}$, d.h. dem Volumenstrom eines Erzeugerkreises, so dass dann $\dot{V}_{pri,i} = f(\dot{V}_{ec})$ ist.

Gemäß einer Ausführungsvariante kann die erste Umwälzpumpe so geregelt werden, dass der Volumenstrom $\dot{V}_{pri}$ des Primärkreises vor der Übergabestelle in einem vorgegebenen Verhältnis zu dem Volumenstrom $\dot{V}_{sec}$ des Sekundärkreises hinter der Übergabestelle steht. Damit lässt sich die funktionale Abhängigkeit mathematisch durch $\dot{V}_{pri} = a \cdot \dot{V}_{sec}$ beschreiben, wobei a das Verhältnis zwischen dem Volumenstrom $\dot{V}_{pri}$ prides Primärkreises vor der Übergabestelle und dem Volumenstrom $\dot{V}_{sec}$ des Sekundärkreises hinter der Übergabestelle darstellt. Die funktionale Abhängigkeit ist somit durch eine lineare Abhängigkeit beschrieben. Im einfachsten Fall kann a = 1 sein. Dies bedeutet, dass die erste Umwälzpumpe so geregelt wird, dass der Volumenstrom $\dot{V}_{pri}$ des Primärkreises vor der Übergabestelle dem Volumenstrom $\dot{V}_{sec}$ des Sekundärkreises hinter der Übergabestelle entspricht. Um ausreichend Regelungsreserve im Sekundärkreis zu haben sollte jedoch ein Verhältnis zwischen 1,0 und 1,3 gewählt werden.

Alternativ kann die erste Umwälzpumpe so geregelt werden, dass der Volumenstrom $\dot{V}_{pri}$ des Primärkreises vor der Übergabestelle in einem vorgegebenen Abstand zu dem Volumenstrom $\dot{V}_{sec}$ des Sekundärkreises hinter der Übergabestelle einhält. Damit lässt sich die funktionale Abhängigkeit mathematisch durch $\dot{V}_{pri} = \dot{V}_{sec} + b$ beschreiben, wobei b der Abstand zwischen dem Volumenstrom $\dot{V}_{prid}$ des Primärkreises vor der Übergabestelle und dem Volumenstrom $\dot{V}_{sec}$ des Sekundärkreises hinter der Übergabestelle darstellt, quasi einen Offset bildet, der größer als null ist.

Weiterhin kann eine Kombination der beiden letztgenannten Varianten erfolgen, wobei dann die erste Umwälzpumpe so geregelt wird, dass die funktionale Abhängigkeit des Volumenstrom $\dot{V}_{pri}$ des Primärkreises vor der Übergabestelle von dem Volumenstrom $\dot{V}_{sec}$ des Sekundärkreises hinter der Übergabestelle der Funktion $\dot{V}_{pri} = a \cdot \dot{V}_{sec} + b$ entspricht, wobei der Koeffizient a eine lineare Abhängigkeit der beiden Volumenströme und der Koeffizient b einen Offset beschreibt.

Der Primärkreis kann zumindest einen Erzeugerkreis aufweisen, in dem wenigstens ein Wärme- oder Kälteerzeuger das Heiz- oder Kühlmedium aufheizt oder kühlt und eine mit dem Wärme- oder Kälteerzeuger in Reihe liegende Erzeugerpumpe das Heiz- oder Kühlmedium des Erzeugerkreises fördert, wobei die zu regelnde, erste Umwälzpumpe diese Erzeugerpumpe ist.

Alternativ hierzu bzw. in Weiterbildung dieser Variante kann der Primärkreis eine Anzahl (m) parallel geschalteter Erzeugerkreise aufweisen, in denen jeweils wenigstens ein Wärme- oder Kälteerzeuger das Heiz- oder Kühlmedium aufheizt oder kühlt und jeweils eine mit dem entsprechenden Wärme- oder Kälteerzeuger in Reihe liegende Erzeuger- pumpe einen erzeugerspezifischen Volumenstroms $\dot{V}_{pri,i}$ fördert, wobei die zu regelnde erste Umwälzpumpe dann entsprechend eine dieser parallelen Erzeugerpumpen ist.

Vorzugsweise ist die zu regelnde, erste Umwälzpumpe in diesem Fall diejenige Erzeugerpumpe ist, die in einem eine Spitzenlast bedienenden Erzeugerkreis liegt. Das bedeutet, dass die erfindungsgemäße Volumenstromregelung nur auf diese Spitzenlastpumpe angewendet wird. Die Erzeugerpumpen der anderen, eine Grundlast bereitstellenden Erzeugerkreise sind dagegen nicht oder anders geregelt.

Wie bereits zuvor angesprochen, kann der Erzeugerkreis oder können die Erzeugerkreise mittels der Übergabestelle direkt mit dem Sekundärkreis verbunden sein, d.h. ohne Zwischenschaltung eines Zubringerkreises.

Gemäß einer alternativen Variante kann ein solcher Zubringerkreis jedoch vorhanden sein, um Druckverluste bei langen Förderdistanzen zu kompensieren. Ein solcher Zubringerkreis kann aus Sicht der Übergabestelle zum Sekundärkreis/ Verbraucherseite als Teil des Primärkreises, d.h. als Teil der Erzeugerseite verstanden werden. Der Erzeugerkreis oder die Erzeugerkreise sind dann mittels der Übergabestelle indirekt mit dem Sekundärkreis verbunden. So kann der Primärkreis einen Zubringerkreis aufweisen, der an der Übergabestelle mit dem Sekundärkreis gekoppelt ist, wobei in dem Zubringerkreis eine Zubringerpumpe liegt, die ein Heiz-oder Kühlmedium im Zubringerkreis fördert, und wobei die zu regelnde, erste Umwälzpumpe diese Zubringerpumpe ist.

Es ist aber auch möglich, dass der Zubringerkreis Teil des Sekundärkreises ist oder diesen gar bildet. In diesem Fall koppelt die Übergabestelle den Primärkreis mit dem oder den Erzeuger(n) mit diesem Zubringerkreis. Es liegt dann auch hier in dem Zubringerkreis eine Zubringerpumpe, die ein Heiz- oder Kühlmedium im Zubringerkreis fördert. Da diese Zubringerpumpe Teil des Sekundärkreises ist, entspricht die zweite Umwälzpumpe dann dieser Zubringerpumpe. Diese Variante ist insbesondere in Kombination mit einer Erzeugerpumpe zu verstehen, die der ersten, zu regelnden Umwälzpumpe entspricht. Die Zubringerpumpe als besagte zweite Pumpe kann ungeregelt oder autonom geregelt sein, z.B. entsprechend eines Differenzdrucks, einer Temperatur oder eines Volumenstroms.

Gemäß einer anderen Ausführungsvariante kann diese Zubringerpumpe aber ebenso wie die Erzeugerpumpe nach dem erfindungsgemäßen Verfahren volumenstromgeregelt sein. Es gibt dann zwei zu regelnde erste Umwälzpumpen im Primärkreis respektive auf der Erzeugerseite. In dieser Variante weist der Primärkreis einen Zubringerkreis auf, der an der Übergabestelle mit dem Sekundärkreis gekoppelt ist und mittels einer zweiten Übergabestelle mit dem oder den Erzeugerkreis(en) gekoppelt ist, wobei in dem Zubringerkreis eine Zubringerpumpe liegt, die ein Heiz- oder Kühlmedium im Zubringerkreis fördert und eine weitere erste Umwälzpumpe bildet, welche wie die eine erste Umwälzpumpe geregelt wird.

Der Sekundärkreis weist eine Anzahl (n) parallel geschalteter Verbraucherkreise auf, in denen jeweils wenigstens ein Verbraucher die Wärme oder Kälte des Heiz- oder Kühlmediums verbraucht, und in dem oder denen jeweils eine mit dem entsprechenden Verbraucher in Reihe liegende, autonom geregelte Verbraucherpumpe das Heiz- oder Kühlmedium in dem entsprechenden Verbraucherkreis fördert. In der Regel liegt eine solche Pumpe im Vorlauf des Verbrauchers. Sie kann jedoch auch im Rücklauf liegen.

Offenbart wird des Weiteren ein Pumpensystem, das die zumindest eine erste Umwälzpumpe zur Förderung eines Heiz- oder Kühlmediums in dem Primärkreis der Heizungs- oder Kühlungsanlage und die zumindest eine zweite Umwälzpumpe zur Förderung eines Heiz- oder Kühlmediums in zumindest einem Teilbereich des mit dem Primärkreis über die Übergabestelle gekoppelten Sekundärkreises umfasst, wobei das Pumpensystem zur Ausführung des erfindungsgemäßen Verfahrens eingerichtet ist.

Dies bedeutet insbesondere, dass das Pumpensystem eingerichtet ist, den Volumenstrom der ersten Umwälzpumpe in funktionaler Abhängigkeit von dem Volumenstrom des Sekundärkreises hinter der Übergabestelle zu regeln, wie dies zuvor und nachfolgend beschrieben ist. Dies hat den Vorteil, dass die Regelungsfunktion ohne Beteiligung einer Gebäudeautomation möglich ist. Die beteiligten Pumpen erfassen dabei vorzugsweise alle erforderlichen (Mess-) Größen (je nach Ausführungsvariante sind mehr oder weniger Größen erforderlich), und kommunizieren diese an die zumindest eine zu regelnde erste Pumpe. Diese empfängt die Größen und ermittelt daraus selbst den einzustellenden Volumenstrom gemäß den hier beschriebenen mathematischen Vorschriften.

Somit betrifft die Erfindung auch eine Umwälzpumpe zur Förderung eines Heiz- oder Kühlmediums in dem Primärkreis der Heizungs- oder Kühlungsanlage mit einer Pumpenelektronik zur Bestimmung eines Sollwerts, wobei sie in ihrem Volumenstrom geregelt und dazu eingerichtet ist, hierfür einen Volumenstromsollwert in funktionaler Abhängigkeit von dem Volumenstrom zumindest einer der anderen Umwälzpumpen zu berechnen, die der bestimmungsgemäßen Förderung eines Heiz- oder Kühlmediums in dem Sekundärkreis (4) der Heizungs- oder Kühlungsanlage (1) dienen.

Weitere Merkmale und Vorteile des erfindungsgemäßen Verfahrens werden nachfolgend anhand von Ausführungsbeispielen und der beigefügten Figuren erläutert. Es zeigen:

Figur 1:  eine schematische Darstellung eines Teils einer beispielhaften Heizungsanlage mit einer Übergabestelle zu einem Sekundärkreis mit mehr als einem Verbraucherkreis

Figur 2:  eine Heizungsanlage nach Figur 1 mit zusätzlichen Temperaturmessstellen im Primärkreis und den Verbraucherkreisen

Figur 3:  eine schematische Darstellung einer anderen beispielhaften Heizungsanlage einem primärseitigen Erzeugerkreis und mehr als einem sekundärseitigen Verbraucherkreis, mit Temperaturmessstellen im Primärkreis und den Verbraucherkreisen und mit Vorlaufmischern in zwei Verbraucherkreisen

Figur 4:  eine Erweiterung der Heizungsanlage nach Figur 3 durch einen Zubringerkreis zwischen dem primärseitigen Erzeugerkreis und den sekundärseitigen Verbraucherkreisen

Figur 5:  eine Erweiterung der Heizungsanlage nach Figur 3 durch mehr als einen Erzeugerkreis im Primärkreis

Figur 6:  eine Erweiterung der Heizungsanlage nach Figur 5 durch Temperaturmessstellen und Rücklaufmischern in den Erzeugerkreisen

Figur 7:  eine schematische Darstellung eines Teils einer anderen beispielhaften Heizungsanlage mit einem primärseitigen Erzeugerkreis und einem daran über eine Übergabestelle gekoppelten Zubringerkreis

Figur 8:  eine Erweiterung der Heizungsanlage nach Figur 7 durch mehr als einen Erzeugerkreis im Primärkreis

Figur 9:  einen Wärmetauscher als Übergabestelle

Figur 10:  eine hydraulische Weiche als Übergabestelle

Figur 11:  einen verlustarmen Verteiler als Übergabestelle

Figur 1 zeigt einen Ausschnitt einer Heizungsanlage 1 mit einem Primärkreis 2 und einem Sekundärkreis 3, die über eine Übergabestelle 3 gekoppelt sind. Eine zu regelnde erste Umwälzpumpe 17 fördert ein Heizmedium im Primärkreis 2. Im Sekundärkreis 4 liegen zwei drehzahlgeregelte zweite Umwälzpumpen 12, die jeweils einem Verbraucherkreis 5 angehören und ein Heizmedium in dem jeweiligen Verbraucherkreis 5 fördern. Strömungstechnisch liegen diese Umwälzpumpen 12 parallel. Somit liegen auch die Verbraucherkreise 5 parallel. Jeder Verbraucherkreis 5 bildet dabei einen Teilbereich des Sekundärkreises 4 und umfasst einen lokalen Vorlauf 10 und einen lokalen Rücklauf 9. Die lokalen Vorläufe 10 gehen von einer zentralen sekundären Vorlaufleitung 7 ab, die mit der Sekundärseite der Übergabestelle 3 verbunden ist. Die lokalen Rückläufe 9 münden in eine zentrale sekundäre Rücklaufleitung 7, die ebenfalls mit der Sekundärseite der Übergabestelle 3 verbunden ist. Innerhalb eines Verbraucherkreises 5 liegen der Verbraucher 6 und die Verbraucherkreispumpe 12 in Reihe, wobei die Verbraucherkreispumpe 12 im lokalen Vorlauf 10 angeordnet ist.

Die beiden dicken Striche neben dem zweiten bzw. rechten Verbraucherkreis 5 deuten an, dass der Sekundärkreis 4 noch weitere Verbraucherkreise 5 umfassen kann. Zudem sei angesprochen, dass die Verbraucherkreise 5 nicht nur einen einzigen Verbraucher 6 umfassen müssen, wie dies in Figur 1 dargestellt ist. Vielmehr kann in jedem Verbraucherkreis 5 eine beliebige Anzahl an Verbrauchern 6 vorhanden sein, die beliebig in Reihe und/ oder parallel zueinander liegen können.

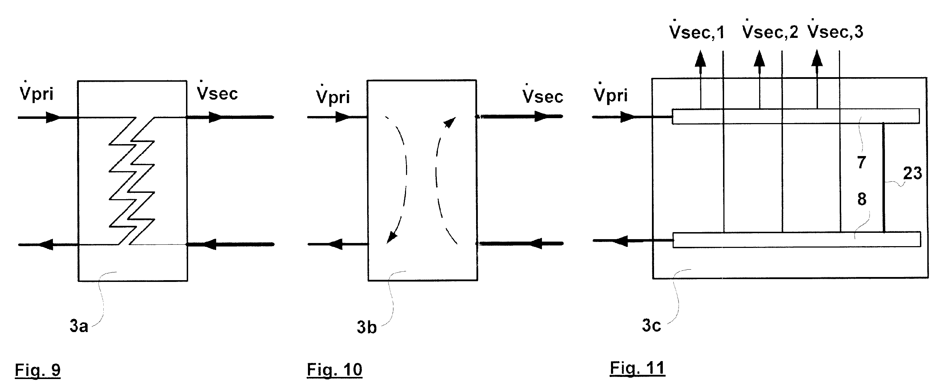

Die Übergabestelle 3 kann ein Wärmetauscher 3a (siehe Figur 9), eine hydraulische Weiche 3b (siehe Figur 10) oder ein verlustarmer Verteiler 3c (siehe Figur 11) sein. Für die Übergabe durch eine dieser Übergabestellen 3a, 3b, 3c kann der Volumenstrom $\dot{V}_{pri}$ auf der Primärseite 2 weitgehend ohne Rückwirkung auf den Volumenstrom $\dot{V}_{sec}$ auf der Sekundärseite 4 eingestellt werden, weil die Kreise 2, 4 hydraulisch entkoppelt sind. Bei einem Wärmeübertrager 3a findet kein Stoffaustausch zwischen der primär- und der Sekundärseite statt, so dass im Primärkreis 2 und im Sekundärkreis 4 verschiedene Wärmeträgermedien verwendet werden können. Demgegenüber findet bei einer hydraulischen Weiche und einem verlustarmen Verteiler ein Stoffaustausch statt, so dass auf der Primär- und der Sekundärseite der Übergabestelle 3 zwangsläufig dasselbe Wärmeträgermedium fließt. Bei einer hydraulischen Weiche 3b liegt ein Kurzschluss innerhalb der Weiche vor dem ersten der parallel geschalteten Verbraucherkreise 5 vor, siehe Figur 10. Bei einem druckarmen Verteiler 3c ist ein solcher Kurzschluss 23 nach dem letzten der parallel geschalteten Verbraucherkreise 5 vorhanden, der den gemeinsamen Vorlaufverteiler 7 mit dem gemeinsamen Rücklaufsammler 8 der Verbraucherkreise 5 hinter dem Abzweig zum letzten der parallelen Verbraucherkreise 5 verbindet, siehe Figur 11.

Die zu regelnde erste Umwälzpumpe 17 liegt in der primärseitigen zentralen Vorlaufleitung 15, die in die Primärseite der Übergabestelle 3 führt. Von der Übergabestelle 3 führt primärseitig ferner eine zentrale primäre Rücklaufleitung 16 weg. Strömungstechnisch sind die primärseitige zentrale Rücklaufleitung 16 und die primärseitige zentralen Vorlaufleitung 15 derart verbunden, dass sie denselben Volumenstrom $\dot{V}_{pri}$ fördern.

Die erste Umwälzpumpe 17 kann entweder eine Zubringerpumpe 17c sein, d.h. Teil eines hydraulisch in sich geschlossenen Zubringerkreises 30 sein, wie er in Figur 4 veranschaulicht ist, oder eine Erzeugerkreispumpe 17b sein, d.h. Teil eines Erzeugerkreises 14 sein, wie er in den Figuren 3 und 4 dargestellt ist.

In der zentralen primärseitigen Vorlaufleitung 15 fließt vor der Übergabestelle 3 ein Volumenstrom $\dot{V}_{pri}$, der dem

Förderstrom der zu regelnden ersten Umwälzpumpe 17 entspricht. Sekundärseitig fließt hinter der Übergabestelle 3 in der zentralen Vorlaufleitung 7 der sekundäre Volumenstrom $\dot{V}_{sec}$, von dem die Verbraucherkreisvolumenströme $\dot{V}_{sec,i}$, d.h. hier die beiden Teilströme $\dot{V}_{sec,1}$ und $\dot{V}_{sec,2}$ abgehen. Diese Verbraucherkreisvolumenströme $\dot{V}_{sec,i}$ entsprechen in dieser Ausführungsvariante dem Förderstrom der jeweiligen Verbraucherkreispumpe 12 in dem entsprechenden Verbraucherkreis 5.

Es sei angemerkt, dass die anhand den Figuren beschriebene Heizungsanlage auch eine Kühlanlage sein kann. Soweit nachfolgend in Bezug auf diese Heizungsanlage 1 die Begriffe "Heizung-" und "Wärme" verwendet sind, gelten für eine Kühlanlage 1 entsprechend sinngemäß die Begriffe "Kühl-" und "Kälte".

Erfindungsgemäß wird nun der Volumenstrom $\dot{V}_{pri}$ der ersten Umwälzpumpe 17 in funktionaler Abhängigkeit von dem Volumenstrom $\dot{V}_{sec}$ des Sekundärkreises 4 hinter der Übergabestelle 3 geregelt. Dies bedeutet, dass entweder der Volumenstrom $\dot{V}_{sec}$ des Sekundärkreises 4 als Sollwert für den Förderstrom der ersten Umwälzpumpe 17 verwendet wird oder aus dem Volumenstrom $\dot{V}_{sec}$ des Sekundärkreises 4 ein solcher Sollwert berechnet wird. Dies wird für verschiedene Anlagenformen nachfolgend mathematisch betrachtet.

Beispielsweise kann also der Volumenstrom $\dot{V}_{sec}$ des Sekundärkreises 4 hinter der Übergabestelle 3 gemessen oder rechnerisch ermittelt und als Sollwert $\dot{V}_{pri,soll}$ bei der ersten Umwälzpumpe 17 eingestellt oder aus dem gemessenen oder rechnerisch ermittelten Volumenstrom $\dot{V}_{sec}$ des Sekundärkreises 4 ein Sollwert $\dot{V}_{pri,soll}$ für den Volumenstrom der ersten Umwälzpumpe 17 berechnet und bei der ersten Umwälzpumpe eingestellt werden.

Wird die Übergabe an der Übergabestelle 3 als adiabat angenommen, d.h. behaftet ohne Wärmeverluste an die Umgebung, so gilt zwischen dem Primärkreis 2 und dem Sekundärkreis 4 der Energieerhaltungssatz nach Gleichung (G1):

$$\dot{V}_{pri} \cdot \rho_{pri} \cdot c_{p,pri} \cdot \Delta T_{pri} = \dot{V}_{sec} \cdot \rho_{sec} \cdot c_{p,sec} \cdot \Delta T_{sec} \qquad (G1),$$

wobei

| | |
|---|---|
| $\dot{V}_{pri}$ | der Volumenstrom im Primärkreis 2, |
| $\dot{V}_{sec}$ | der Volumenstrom im Sekundärkreis 4, |
| $\rho_{pri}$ | die Dichte des im Primärkreis 2 umlaufenden Mediums, |
| $\rho_{sec}$ | die Dichte des im Sekundärkreis 4 umlaufenden Mediums, |
| $c_{p,pri}$ | die spezifische Wärmekapazität des im Primärkreis 2 umlaufenden Mediums, |
| $c_{p,sec}$ | die spezifische Wärmekapazität des im Sekundärkreis 4 umlaufenden Mediums, |
| $\Delta T_{pri}$ | die Temperaturdifferenz zwischen Vor- und Rücklauftemperatur an der Primärseite der Übergabestelle 3, und |
| $\Delta T_{sec}$ | die Temperaturdifferenz zwischen Vor- und Rücklauftemperatur an der Sekundärseite der Übergabestelle 3 ist |

Die Differenz zwischen Vor- und Rücklauftemperatur jeweils auf der Primärseite $\Delta T_{pri}$ und auf der Sekundärseite $\Delta T_{sec}$ wird auch als "Spreizung" oder "Temperaturspreizung" bezeichnet.

Im Falle der Verwendung einer hydraulischen Weiche 3b und eines verlustarmen Verteilers 3c als Übergabestelle 3 fließt im Primärkreis 2 und im Sekundärkreis 4 dasselbe Medium, denn es findet ein Stoffaustausch zwischen diesen Kreisen statt. Letzteres ist bei einem Wärmetauscher 3a nicht der Fall, so dass hier unterschiedliche Medien vorhanden sein können. Gleichwohl verwendet man in der Regel auch hier dieselben Medien im Primärkreis 2 und Sekundärkreis 4, wodurch der Aufbau und die Wartung der Anlage vereinfacht wird, da nicht zwei verschiedene Wärmeträgermedien oder Kühlmittel verwendet bzw. vorgehalten werden müssen. Als Heizmedium oder Kühlmedium kommen vor allem Wasser oder Glykol oder ein Gemisch aus diesen Flüssigkeiten zur Anwendung.

Bei Mediengleichheit auf beiden Seiten der Übergabestelle 3 sind unter Vernachlässigung der Temperaturabhängigkeit die spezifischen Wärmekapazitäten $c_{p,pri}$, $c_{p,sec}$ gleich, und die Dichten $\rho_{pri}$, $\rho_{sec}$ gleich, so dass sich die entsprechenden Terme aus Gleichung 1 kürzen lassen. Es gilt dann gemäß Gleichung (G2)

$$\dot{V}_{pri} \cdot \Delta T_{pri} = \dot{V}_{sec} \cdot \Delta T_{sec} \qquad (G2).$$

Bei einem Angleichen des primärseitigen (erzeugerseitigen) Volumenstroms $\dot{V}_{pri}$ an den sekundärseitigen (verbraucherseitigen) Volumenstrom $\dot{V}_{sec}$ ergibt sich nach Gleichung G2, dass auch die Temperaturspreizungen $\Delta T_{pri}$, $\Delta T_{sec}$ auf beiden Seiten der Übergabestelle 3 gleich sind, denn $\dot{V}_{pri}$ und $\dot{V}_{sec}$ kürzen sich dann raus. Dies kann im Sinne der erfindungsgemäßen Regelungsfunktion als ein Regelungsoptimum verstanden werden, da der Erzeugerkreis erstens nicht mehr Volumenstrom liefert, als für die Verbraucher erforderlich ist, zweitens im Heizfall keine höhere Vorlauftemperatur liefert als bei den Verbrauchern ankommt (im Kühlfall keine niedrigere Vorlauftemperatur liefert als bei den Verbrauchern ankommt), und drittens im Heizfall keine höhere Rücklauftemperatur bekommt, als von den Verbrauchern zurückkommt (im Kühlfall keine niedrigere Rücklauftemperatur bekommt, als von den Verbrauchern zurückkommt).

Bei einer (idealen) hydraulischen Weiche 3b (Figur 10) finden in diesem Zustand keine Mischungsvorgänge statt. Im Bypass 23 eines druckarmen Verteilers 3c (Figur 11) findet ferner in diesem Zustand keine Überströmung statt. Bei Übergabe mittels Gegenstromwärmeübertrager 3a (Figur 9) herrscht zwischen Primärseite (pri) und Sekundärseite (sec) sowohl im Vorlauf (VL) wie auch im Rücklauf (RL) und damit im gesamten Bereich der Wärmeübertragungsfläche, die gleiche "treibende Temperaturdifferenz"

$$T_{treib} = T_{pri\_VL} - T_{sec\_VL} = T_{pri\_RL} - T_{sec\_RL}.$$

Aus Gleichung G2 ergeben sich zwei mögliche Messgrößen, um die Drehzahl der primärseitigen Umwälzpumpe 17 so zu regeln, dass der Primärvolumenstrom $\dot{V}_{pri}$ dem Bedarf angenähert wird. Entweder über die Temperaturspreizung $\Delta T_{pri}$ im Primärkreis 2, die der Temperaturspreizung $\Delta T_{sec}$ im Sekundärkreis 4 anzunähern ist, oder über den primärseitigen Volumenstrom $\dot{V}_{pri}$, der dem sekundärseitigen Volumenstrom $\dot{V}_{sec}$ anzunähern ist.

Die Regelung der Temperaturspreizung $\Delta T_{pri}$ im Primärkreis 2 hat jedoch den Nachteil, dass aufgrund der Wärmekapazitäten störende Totzeiten in der Regelstrecke vorhanden sind. Deshalb wird erfindungsgemäße eine Regelung des primärseitigen Volumenstroms $\dot{V}_{pri}$ vorgeschlagen. Wie dies konzeptionell erfolgt, wird zunächst anhand von Figur 1 veranschaulicht.

Gemäß dem in Figur 1 gezeigten ersten Beispiel umfasst der Primärkreis 2 eine zu regelnde Kreiselpumpe 17, der Sekundärkreis 4 zwei oder mehr geregelte, strömungstechnisch parallel fördernde Verbraucherkreispumpen 12. Die primärseitige Kreiselpumpe 17 kann eine Zubringerpumpe 17c sein, die aufgrund einer zu großen Distanz zwischen Erzeugerkreis(en) und Verbraucherkreisen 5a und der damit verbundenen hydraulischen Widerstände im Rohrleitungssystem das Wärmeträgermedium zur Übergabestelle 3 an die Verbraucherkreise 5a fördert. Die primärseitige Kreiselpumpe 17 kann aber auch eine Erzeugerpumpe 17b sein.

Fordert man das o.g. Regeloptimum, d.h. $\Delta T_{pri} = \Delta T_{sec}$ reduziert sich Gleichung G1 zu

$$\dot{V}_{pri} \cdot \rho_{pri} \cdot c_{p,pri} \overset{!}{=} \dot{V}_{sec} \cdot \rho_{sec} \cdot c_{p,sec} \qquad (G3).$$

Für die Volumenstromregelung der primärseitigen Kreiselpumpe 17 wird ihr aktueller Förderström $\dot{V}_{pri,ist}$ als Istwert verwendet. Dieser kann innerhalb oder außerhalb der Kreiselpumpe 17 entweder direkt gemessen werden, beispielsweise mittels einem Volumenstromsensor, oder aus anderen physikalischen Größen berechnet werden oder geschätzt werden. Eine Berechnung kann beispielsweise aus dem von der Pumpe erzeugten Differenzdruck und der Pumpendrehzah. Eine Schätzung kann anhand von Modellgleichungen für das mechanisch-hydraulische Pumpen-Motormodell gegebenenfalls unter berücksichtigen des elektrisch-mechanischen Motormodells erfolgen, wie dies üblicherweise bei regelungstechnischen Beobachtern der Fall ist.

Daher wird Gleichung G3 nach dem primärseitigen Volumenstrom $\dot{V}_{pri}$ umgestellt.

Denn für den entsprechenden Sollwert der Volumenstromregelung $\dot{V}_{pri,soll}$ gilt dann:

$$\dot{V}_{pri,soll} \overset{!}{=} \dot{V}_{sec} \frac{\rho_{sec} \cdot c_{p,sec}}{\rho_{pri} \cdot c_{p,pri}} \qquad (G4).$$

Daraus wird ersichtlich, dass sich bei Mediengleichheit auf Primär- 2 und Sekundärseite 4 der Übergabestelle 3 die Forderung nach der Gleichheit der Volumenströme ergibt, d.h. $\dot{V}_{pri,soll} = \dot{V}_{sec}$ gilt. Bei Medienverschiedenheit ist allerdings der sekundärseitige Gesamtvolumenstrom $\dot{V}_{sec}$ mit einem Faktor k zu gewichten, der das Produkt aus den Dichteverhältnisse und Wärmekapazitätsverhältnissen beschreibt. Es gilt dann

$$\dot{V}_{pri,soll} = k \cdot \dot{V}_{sec} \text{ mit } k = \frac{\rho_{sec} \cdot c_{p,sec}}{\rho_{pri} \cdot c_{p,pri}} \qquad (G5).$$

bzw. im Hinblick auf die funktionale Abhängigkeit

$$\dot{V}_{pri,soll} = a \cdot k \cdot \dot{V}_{sec} + b \text{ mit } k = \frac{\rho_{sec} \cdot c_{p,sec}}{\rho_{pri} \cdot c_{p,pri}} \qquad (G5a),$$

wobei der Koeffizient a eine lineare Abhängigkeit der beiden Volumenströme und der Koeffizient b einen Offset beschreibt.

Nun ist zu berücksichtigen, dass gemäß Figur 1 sekundärseitig mehr als ein Verbraucherkreis 5 vorhanden ist, so dass es verbraucherkreisspezifische Teilströme gibt. Der Gesamtvolumenstrom $\dot{V}_{sec}$ im Sekundärkreis 4 entspricht deshalb der Summe aller n Verbraucherkreisvolumenströme $\dot{V}_{sec,1}$, $\dot{V}_{sec,2}$, ..., $\dot{V}_{sec,n}$, die mathematisch einfach addiert werden können.

$$\dot{V}_{sec} = \sum_{1}^{n} \dot{V}_{sec,i} \qquad\qquad (G6).$$

Die Verbraucherkreisvolumenströme $\dot{V}_{sec,1}$, $\dot{V}_{sec,2}$, ..., $\dot{V}_{sec,n}$ können innerhalb oder außerhalb der Verbraucherkreispumpen 12 entweder direkt gemessen, berechnet oder geschätzt werden, wie dies oben zur primärseitigen Kreiselpumpe ausgeführt wurde.

Vor diesem Hintergrund ist die Kernidee des erfindungsgemäßen Verfahrens, die primärseitige Kreiselpumpe 17 so zu regeln, dass ihr Förderstrom dem mit dem Faktor k gewichteten Summe der Verbraucherkreisvolumenströme, insbesondere der im Sekundärkreis 4 strömungstechnisch parallel liegenden Verbraucherkreispumpen 12 entspricht gegebenenfalls multipliziert mit dem vorbestimmten Verhältniswert a und/ oder addiert mit dem vorgegebenen Offset b, wobei insbesondere im Falle von Mediengleichheit der Faktor k = 1 ist.

Die Verbraucherkreisvolumenströme $\dot{V}_{sec,1}$, $\dot{V}_{sec,2}$, ..., $\dot{V}_{sec,n}$ können von unabhängigen Volumenstrommesseinrichtungen oder von Volumenstromsensoren innerhalb der Verbraucherkreispumpen 12 ermittelt werden. Unabhängige Volumenstrommesseinrichtungen haben den Vorteil, dass sie an einer beliebigen Stelle innerhalb eines Verbraucherkreises 5 installiert werden können. Dies ist insbesondere dann von Vorteil, wenn Rezirkulationen im Verbraucherkreis 5 vorliegen und die Verbraucherkreispumpen 12 den Volumenstrom durch die Verbraucher 6 , nicht jedoch den hierzu geringeren Verbraucherkreisvolumenstrom fördern, was nachfolgend noch veranschaulicht wird.

Demgegenüber hat jedoch eine Ermittlung der Verbraucherkreisvolumenströme durch die Verbraucherkreispumpen den Vorteil, dass auf zusätzliche externe Messtechnik zur Volumenstrommessung in den Verbraucherkreisen verzichtet werden kann. Somit entfällt auch die Notwendigkeit, zusätzliche Stromversorgungen für eine solche externe Messtechnik sowie zusätzliche Kommunikationsleitungen zur Übertragung der Messdaten vorzusehen, wodurch der Installations-, Wartungs- und Kostenaufwand minimal ist. Moderne elektronisch geregelte Umwälzpumpenaggregate ermitteln in der Regel für ihre Regelung, für eine Betriebspunkterkennung und/ oder für sonstige Zusatzfunktionen wie Fehleranalysen den Förderstrom Q, so dass hier eine entsprechende Messtechnik und/ oder softwaretechnische Ermittlungsverfahren bereits in der Pumpenelektronik vorhanden sind. Idealerweise können solche Pumpenaggregate mit integrierter Volumenstromermittlung als Verbraucherkreispumpen 12 verwendet werden.

Des Weiteren ist es von Vorteil, wenn die zu regelnde Kreiselpumpe 17 den Sollwert für Ihre Volumenstromregelung in ihrer Pumpenelektronik auf der Grundlage der Verbraucherkreisvolumenströme $\dot{V}_{sec,1}$ selbsttätig ermittelt. Hierzu werden die ermittelten Verbraucherkreisvolumenströme $\dot{V}_{sec,1}$ an die zu regelnde Kreiselpumpe kommuniziert. In dieser Ausführungsvariante ist dann in der Pumpenelektronik der primärseitigen Kreiselpumpe 17 eine Auswerteeinheit integriert, die aus den Verbraucherkreisvolumenströmen $\dot{V}_{sec,1}$, $\dot{V}_{sec,2}$, ..., $\dot{V}_{sec,n}$ den primärseitigen Sollvolumenstrom $\dot{V}_{pri,soll}$ gemäß Gleichungen G5 und G6 bei gegebenenfalls vorgegebenen Faktor k berechnet, sofern keine Mediengleichheit vorliegt. In der Pumpenelektronik der zu regelnden Pumpe 17 kann dieser Faktor k jedoch auch standardmäßig mit k = 1 vorbelegt sein, so dass bei der Inbetriebnahme im Falle von Mediengleichheit beidseits der Übergabestelle 3 keine weitere Einstellung bzw. Vorgabe für k erfolgen muss.

Die Übertragung der Verbraucherkreisvolumenströme $\dot{V}_{sec,1}$ kann vorteilhafterweise von der jeweiligen Messstelle direkt an die primärseitige Kreiselpumpe erfolgen, d.h. beispielsweise von den unabhängigen Volumenstrommesseinrichtungen oder von den einzelnen Verbraucherkreispumpen 12.

Gemäß einer alternativen Variante kann die Ermittlung des Sollvolumenstroms $\dot{V}_{pri,soll}$ gemäß Gleichungen G5 und G6 aus den Verbraucherkreisvolumenströmen $\dot{V}_{sec,i}$ auch in einer externen Auswerteeinheit 28 erfolgen, beispielsweise in einer zentralen Kommunikationseinrichtung 28, die einerseits in Kommunikationsverbindung mit den Verbraucherkreispumpen 12 steht, um die ermittelten Verbraucherkreisvolumenströme $\dot{V}_{sec,1}$ von diesen zu erhalten oder anzufordern, andererseits mit der zu regelnden primärseitigen Pumpe 17 in Kommunikationsverbindung steht, um dieser den ermittelten Sollvolumenstrom $\dot{V}_{pri,soll}$ zu übermitteln. Für eine eventuelle Vorgabe des Gewichtungsfaktors k der externen Auswerteeinheit gilt das zuvor Gesagte analog.

Zur Datenübertragung weisen die Volumenstrommesseinrichtungen und/ oder Verbraucherkreispumpen 12 geeignete Kommunikationsschnittstellen auf, um die Verbraucherkreisvolumenstromdaten zu übertragen. Moderne Pumpenaggregate verfügen heutzutage bereits über Kommunikationsschnittstellen wie CAN. LON. BACnet, Modbus, LAN etc, so dass keine zusätzliche Kommunikationseinheiten erforderlich, um die Volumenstromdaten an die zu regelnde Pumpe zu übertragen. Auch sind Funkmodule bei Pumpenaggregaten hinlänglich bekannt. In den Figuren ist eine kabelgebundene Kommunikation mittels Datenleitungen 20 veranschaulicht, die an das Datennetzwerk 19 angeschlossen sind, an welches auch die primärseitige Kreiselpumpe 17 angeschlossen ist.

Wie bereits erwähnt, gibt es Heizungs- und Kühlanlagen, bei denen ein Verbraucherkreisvolumenstrom $\dot{V}_{sec,1}$ nicht mit dem Verbrauchervolumenstrom $\dot{V}_{consumer,i}$ der in dem entsprechenden Verbraucherkreis angeordneten Verbraucherkreispumpe 12 identisch ist. So ist es in der Heizungstechnik beispielsweise üblich, jedem oder einzelnen Verbraucherkreisen 5a durch Beimischen von Rücklaufflüssigkeit der lokalen Rücklaufleitung 9 eine individuell verringerte Vorlauftemperatur bereitzustellen. Dies ist zum Beispiel bei Fussbodenheizungen der Fall. Wie in Figur 2 veranschaulicht, kann hierfür in dem entsprechenden Verbraucherkreis 5a ein Vorlaufmischer 11, in Figur 2 in Gestalt eines Dreiwege-Stellventils ausgeführt, vorhanden sein, der in der lokalen Vorlaufleitung 10 des Verbraucherkreises 5a angeordnet und über eine Mischleitung 22 mit der lokalen Rücklaufleitung 9 verbunden ist. Der Vorlaufmischer 11 kann motorbetrieben sein, insbesondere autonom Temperaturgeregelt sein, um eine vorbestimmte Vorlauftemperatur $T_{VL,sec,i}$ in dem entsprechenden Verbraucherkreis 5a zu erhalten.

Durch die Verwendung eines Mischers 11 in einem Verbraucherkreis 5a zum Zumischen lokaler Rücklaufflüssigkeit in den lokalen Vorlauf 10 ist die Summe der von den Verbraucherkreispumpen 12 geförderten Volumenströme größer als der von der Übergabestelle 3 bereitgestellte bzw. zur Übergabestelle 3 rückfließende Volumenstrom $\dot{V}_{sec}$.

Dies ist unproblematisch, sofern ein Verbraucherkreisvolumenstrom $\dot{V}_{sec,i}$ in Strömungsrichtung vor dem Mischer 11 in der lokalen Vorlaufleitung 10 oder in der lokalen Rücklaufleitung 9 hinter dem Abzweig in die Mischleitung 22 ermittelt wird. Dies ist mit einer pumpenunabhängigen Volumenstrommesseinrichtung grundsätzlich möglich, da sie an jedem beliebigen Ort im Verbraucherkreis 5a angeordnet werden kann. Soll jedoch die Verbraucherkreisvolumenstromermittlung durch die Verbraucherkreispumpen 12 erfolgen, weil sie ohnehin über die hierfür notwendigen Mittel verfügt, so ist dies nicht unmittelbar möglich, wenn die Verbraucherkreispumpen , wenn in Strömungsrichtung hinter dem Mischer 11 oder besagtem Abzweig liegen, wie dies in Fig. 2 der Fall ist. In diesem Fall können die ermittelten Verbrauchervolumenströme $\dot{V}_{consumer,i}$ nicht direkt addiert werden. Um dennoch eine Addition zu ermöglichen, kann eine Korrektur der ermittelten Verbrauchervolumenströme $\dot{V}_{consumer,i}$ erfolgen. Bezüglich des Beispiels in Figur 2 wäre dies bei dem linken und dem mittleren Verbraucherkreis 5a erforderlich, da diese jeweils einen Mischer 11 umfassen.

So kann gemäß einer vorteilhaften Weiterbildung des erfindungsgemäßen Verfahrens eine Korrektur jedes von den Verbraucherkreispumpen 12 ermittelten Volumenstroms $\dot{V}_{consumer,i}$ durch Multiplikation mit einem verbraucherkreisspezifischen Korrekturwert $C_i$ erfolgen. Dieser Korrekturwert $C_i$ ist vorzugsweise gebildet durch das Verhältnis aus der Temperaturdifferenz zwischen dem lokalen Vorlauf 10 hinter dem Mischer 11 und dem lokalen Rücklauf 9 des entsprechenden Verbraucherkreises 5a zur Temperaturdifferenz zwischen dem zentralen sekundärseitigen Vorlauf 7 und dem lokalen Rücklauf 9 des entsprechenden Verbraucherkreises 5a. Alternativ kann anstelle der zentralen sekundärseitigen Vorlauftemperatur die primärseitige Vorlauftemperatur verwendet werden. Dies hat den Vorteil, dass keine zusätzliche Messtechnik zur Messung der sekundärseitigen Vorlauftemperatur erforderlich ist. Vielmehr kann auf Messtechnik für die Erfassung der Temperaturen zurückgegriffen werden, die in den Kreiselpumpen integriert oder zumindest teilintegriert ist.

So können also geeigneterweise die Temperaturen im lokalen Vorlauf 10 des Verbraucherkreises 5a hinter dem Mischer 11, im lokalen Rücklauf 8 sowie im primären Vorlauf 15 gemessen und zur Berechnung des Korrekturwerts $C_i$ für diesen Verbraucherkreis 5a gemäß zuvor genanntem Verhältnis verwendet werden. Die Ermittlung der Temperatur im lokalen Vorlauf 7 kann mittels eines ersten Temperatursensors 31, 33 (siehe Figur 2-4) erfolgen, der außerhalb der Verbraucherkreispumpe 12 angeordnet ist. Er kann alternativ aber auch in dieser integriert sein und die Temperatur des Förderstroms messen, da die Verbraucherkreispumpe 12 ohnehin in der Vorlaufleitung 10 angeordnet ist, so dass die Fördermedientemperatur die Vorlauftemperatur ist. Die Ermittlung der Temperatur im lokalen Rücklauf 9 kann mittels eines zweiten Temperatursensors 32, 34 (siehe Figur 2-4) erfolgen, der außerhalb der Verbraucherkreispumpe 12 angeordnet ist. Sofern allerdings die Verbraucherkreispumpe 12 im Rücklauf des Verbraucherkreises 5a angeordnet ist, kann der zweite Temperatursensor in dieser Pumpe 12 integriert sein und die Fördermedientemperatur erfassen. Schließlich kann die Ermittlung der Temperatur im primären zentralen Vorlauf 15 mittels eines dritten Temperatursensors 24 (siehe Figur 2-4) erfolgen, der außerhalb der zu regelnden Pumpe 17 im zentralen sekundärseitigen Vorlauf 7 oder außerhalb der zu regelnden Pumpe 17 im primärseitigen Vorlauf 15 (siehe Figur 2-4) oder innerhalb der zu regelnden Pumpe 17 im primärseitigen Vorlauf 15 angeordnet sein kann.

Gemäß der Ausführungsvariante in Figur 2 können der erste und der zweite Temperatursensor 31, 32 in Kommunikationsverbindung mit der Verbraucherkreispumpe 12 des entsprechenden Verbraucherkreises 5a stehen und die Temperaturmesswerte an die Pumpenelektronik dieser Verbraucherkreispumpe 12 übertragen. Dies kann sowohl bei pumpenintegrierten als auch bei pumpenexternen Sensoren kabelgebunden über Messleitungen 25 oder per Funk erfolgen. Die Verbraucherkreispumpe 12 übermittelt dann die Temperaturmesswerte weiter an die zu regelnde primärseitige Pumpe 17, in deren Pumpenelektronik der Korrekturwert berechnet wird.

Gemäß einer alternativen Ausführungsvariante können die Temperatursensoren aber auch eigene Kommunikationsschnittstelle mit entsprechender Kommunikationsfähigkeit aufweisen, und an das Datennetzwerk 19 per Funk oder Kabel angeschlossen sein. Dies ermöglicht eine direkte Zuleitung der Temperaturmesswerte an die zu regelnde Pumpe 17, so dass bezüglich der Datenübertragung kein Umweg über die Verbraucherkreispumpen 12 erfolgen muss.

In gleicher Weise kann gemäß der Ausführungsvariante in Figur 2 der dritte Temperatursensor 24 in Kommunikationsverbindung mit der zu regelnden primärseitigen Kreiselpumpe 17 stehen und die Temperaturmesswerte an deren Pumpenelektronik übertragen. Dies kann ebenfalls sowohl bei pumpenintegriertem als auch bei pumpen-externem Sensor kabelgebunden über eine Messleitung 25 oder per Funk erfolgen.

Die zu regelnde primärseitige Pumpe 17 erhält somit Messwerte von allen drei Temperatursensoren 24, 31, 32 bzw. 24, 33, 34 und kann den verbraucherkreisspezifischen Korrekturwert $C_i$ berechnen, indem die Differenz aus der lokalen Vorlauf- und Rücklauftemperatur durch die Differenz aus der zentralen Vorlauf- und der lokalen Rücklauftemperatur geteilt wird.

Es sei angemerkt, dass nicht unbedingt die zu regelnde, primärseitige Pumpe 17 die Berechnung des Korrekturwerts $C_i$ durchführen muss. Dies kann vielmehr auch in einer der Verbraucherpumpen erfolgen, damit diese den korrekten Verbraucherkreisvolumenstrom bereitstellen. In diesem Fall müssen die Temperaturmesswerte an die entsprechende Verbraucherkreispumpe 12 übertragen werden, d.h. die zentrale Vorlauftemperatur an alle Verbraucherkreispumpen 12. Dies kann kabelgebunden über das Datennetzwerk 19 oder per Funk erfolgen. Ferner kann es von der zu regelnden Pumpe 17 oder von dem dritten Temperatursensor durchgeführt werden.

Gemäß einer weiteren Alternative kann die Berechnung des Korrekturwerts $C_i$ in der zentralen Auswerteeinheit erfolgen, die den Sollvolumenstrom für die zu regelnde primärseitige Pumpe bereitstellt. Entsprechend den vorgenannten Möglichkeiten sind dann die Temperaturmesswerte an diese zentrale Auswerteeinheit zu übertragen.

Die Temperaturmessung im lokalen Vorlauf 10, lokalen Rücklauf 9 des Verbraucherkreises 5a und des primären Vorlaufs 15 hat den Vorteil, dass auf in den Pumpen vorhandene Messtechnik weitestgehend zurückgegriffen werden kann, d.h. auf zusätzliche, autarke externe Temperaturmesstechnik grundsätzlich verzichtet werden kann, um den jeweiligen Korrekturwert $C_i$ zu ermitteln. Denn idealerweise entspricht die jeweilige Medientemperatur der Vorlauftemperatur, jedenfalls sofern sich die entsprechende Pumpe im Vorlauf befindet. Ist die Verbraucherkreispumpe 12 in den lokalen Vorlauf 10 integriert, ermittelt sie entsprechend die Vorlauftemperatur. Ist sie in den Rücklauf 9 integriert, misst sie entsprechend die Rücklauftemperatur. Der an die jeweilige Verbraucherkreispumpe 12 angeschlossene zweite Temperaturfühler 34 ist dann in dem entsprechend anderen Strömungsweg zu integrieren.

Wird anstelle der primärseitigen Vorlauftemperatur die zentrale sekundärseitige Vorlauftemperatur zur Ermittlung des Korrekturwerts $C_i$ verwendet, ist der dritte Temperatursensor in dem zentralen sekundärseitigen Vorlauf 7 anzuordnen. Allerdings ist die kommunikationstechnische Anbindung in diesem Fall gegebenenfalls schwierig, weil die zu regelnde primärseitige Pumpe 17 und die Verbraucherkreispumpe bei sich weit erstreckenden Heizungsanlagen 1 weit weg von der Messstelle im zentralen sekundären Vorlauf 7 sein können. Daher ist es hier von Vorteil, den dritten Temperatursensor mit einer eigenen Kommunikationseinheit auszustatten und ihn mit dem Datennetzwerk 19 zu verbinden.

Der Gedanke hinter der Ermittlung des Korrekturwerts $C_i$ wird nachfolgend veranschaulicht.

Da sich der Wärmestrom $\dot{Q}$ über dem Mischer 11 nicht ändert, d.h. $\dot{Q}_{sec,i} = \dot{Q}_{consumer,i}$, kann aus den Temperaturdifferenzen (Spreizung) vor und nach dem Mischer 11 der Korrekturwert $C_i$ ermittelt werden, mittels welchem dann aus dem Verbrauchervolumenstrom $\dot{V}_{consumer,i}$ hinter dem Mischer 11 der Verbraucherkreisvolumenstrom $\dot{V}_{sec,i}$ vor dem Mischer 11 berechnet werden kann. Der Korrekturwert Ci kann dem Verhältnis der genannten Temperaturdifferenzen entsprechen. Es gilt dann gemäß Gleichung 7:

$$\dot{V}_{sec,i} = C_i \cdot \dot{V}_{consumer,i} \text{ mit } C_i = \frac{\Delta T_{consumer,i}}{\Delta T_{sec,i}} \qquad\qquad (G7).$$

wobei

$\dot{V}_{sec,i}$      der in den i-ten Verbraucherkreis 5a hineinfließende Verbraucherkreisvolumenstrom (Volumenstrom vor dem Mischer 11),

$\dot{V}_{consumer,i}$      der in dem i-ten Verbraucherkreis 5a durch den oder die Verbraucher 6 fließende Verbrauchervolumenstrom (Volumenstrom hinter dem Mischer 11),

$\Delta T_{consumer,i}$      die Temperaturdifferenz zwischen Vor- 10 und Rücklauf 9 nach dem Mischer 11 im i-ten Verbraucherkreis, und

$\Delta T_{sec,i}$      die Temperaturdifferenz zwischen Vor- 10 und Rücklauf 9 vor dem Mischer 11 im i-ten Verbraucherkreis ist.

Um den Korrekturfaktor $C_i$ zu bestimmen, kann eine Temperaturmessung an vier Punkten des Verbraucherkreislaufs 5a erfolgen, nämlich vor ($T_{VL,sec,i}$) und nach ($T_{VL,consumer,i}$) dem Mischer 11 in der lokalen Vorlaufleitung 10 und vor ($T_{RL,consumer,i}$) und nach ($T_{RL,sec,i}$) dem Abzweig zum Bypass 22 in der lokalen Rücklaufleitung 9, so dass dann gilt:

$$\Delta T_{consumer,i} = T_{VL,consumer,i} - T_{RL,consumer,i} \quad \text{und}$$

$$\Delta T_{sec,i} = T_{VL,sec,i} - T_{RL,sec,i} \tag{G8}.$$

Für die Berechnung des Korrekturfaktors C können aber auch folgende Erkenntnisse herangezogen werden, deren Beachtung den messtechnischen Aufwand reduziert:

Zum einen gilt für die Temperaturdifferenz $\Delta T_{sec,i}$ vor dem Mischer 11 dieselbe Rücklauftemperatur, wie für die Temperaturdifferenz $\Delta T_{consumer,i}$ hinter dem Mischer 11, $T_{RL,consumer,i} = T_{RL,sec,i}$, da sich die Temperatur durch den Abzweig der lokalen Rücklaufleitung 9 in die Mischleitung 22 nicht ändert. Somit genügt eine einzige Temperaturmessung in der lokalen Rücklaufleitung 9, was allerdings für jeden Verbraucherkreis 5a mit Vorlaufmischer 11 erfolgen muss.

Zum anderen ist die Vorlauftemperatur $T_{VL,sec,i}$ vor dem Mischer 11 für alle Verbraucherkreise 5a gleich, so dass anstelle verbraucherkreisbezogener Temperaturmessungen in den lokalen Vorläufen 10 vor den Mischern 11, die zentrale Vorlauftemperatur $T_{VL,sec}$ herangezogen werden kann,

$$T_{VL,sec,1} = T_{VL,sec,2} = T_{VL,sec} \tag{G9}.$$

Unter Berücksichtigung dieser Zusammenhänge kann der verbraucherkreisspezifische Korrekturwert $C_i$ wie folgt ermittelt werden:

$$C_i = \frac{T_{VL,consumer,i} - T_{RL,consumer,i}}{T_{VL,sec} - T_{RL,consumer,i}} \tag{G10}.$$

Bei der Verwendung einer hydraulischen Weiche 3b oder eines druckarmen Verteilers 3c als Übergabestelle 3 kann ferner unter der Annahme idealisierter Verhältnisse angenommen werden, dass die Vorlauftemperatur über die Weiche 3b bzw. den Verteiler 3c gleich bleibt, zumindest sofern und solange der Primärmassestrom $\dot{V}_{pri}$ größer oder gleich dem Sekundärmassestrom $\dot{V}_{sec}$ ist. Es gilt dann $T_{VL,sec} = T_{VL,pri}$. Mit dieser Annahme kann anstelle der sekundärseitigen Vorlauftemperatur $T_{VL,sec}$ die primärseitige Vorlauftemperatur verwendet werden. Dies hat den Vorteil, dass keine zusätzliche Messtechnik im sekundärseitigen Vorlauf zur Temperaturmessung angeordnet werden muss, sondern geeigneterweise die zu regelnde primärseitige Pumpe 17 mit einer Temperaturmesswerte verarbeitenden Pumpenelektronik ausgestattet ist, wie dies bereits heute bei modernen Kreiselpumpen der Fall ist. Diese kann dann die Aufgabe der Messelektronik übernehmen und eine Auswertung vornehmen. Ist die zu regelnde Kreiselpumpe 17 zusätzlich im Vorlauf des Primärkreises angeordnet, kann anstelle eines externen Temperaturfühlers ein pumpenintegrierter Temperatursensor verwendet werden, der die Medientemperatur ermittelt.

Unter Berücksichtigung der getroffenen Annahmen ergibt sich der sekundärseitige Summenvolumenstrom $\dot{V}_{sec}$ aus der Addition der korrigierten Verbrauchervolumenströme $\dot{V}_{consumer,i}$, wobei die Korrektur jedoch nur dort stattfinden muss, wo Mischer 11 in den Verbraucherkreisen 5a sind.

$$\dot{V}_{sec} = \sum_{1}^{n}\left(\dot{V}_{consumer,i} \cdot C_i\right) \text{ mit} \tag{G11a}.$$

$$C_i = \frac{T_{VL.consumer,i} - T_{RL.consumer,i}}{T_{VL,pri} - T_{RL.consumer,i}} \tag{G11b}.$$

Somit erfolgt die Berechnung des primären Sollvolumenstroms vorzugsweise anhand Gleichungen G5 und G11a und b.

Im Falles des in Figur 2 gezeigten Beispiels gilt

$$\dot{V}_{sec} = \dot{V}_{consumer,1} \cdot C_1 + \dot{V}_{consumer,2} \cdot C_2 + \dot{V}_{sec,3} \tag{G12}.$$

Soll die idealisierte Betrachtung der Übergabestelle 3 durch eine realitätsgetreue Betrachtung ersetzt werden, ist eine Temperaturabfall $\Delta T_{pri-sec}$ zwischen dem primärseitigen Vorlauf 15 und dem sekundärseitigen zentralen Vorlauf 7 zu berücksichtigen:

$$T_{VL,sec} = T_{VL,pri} - \Delta T_{pri-sec} \qquad (G13).$$

So kann in einer erfindungsgemäßen Weiterbildung des Verfahrens die Berechnung des verbraucherkreis-spezifischen Korrekturwerts $C_i$ in G11b ersetzt werden durch G14:

$$C_i = \frac{T_{VL.consumer,i} - T_{RL.consumer,i}}{T_{VL.pri} - \Delta T_{pri-sec} - T_{RL.consumer,i}} \qquad (G14).$$

Denn bei realen, großzügig dimensionierten hydraulischen Weichen 3b findet bei Volumenstromabgleich eine Durchmischung in der Weiche 3b statt, bei der im Vorlauf wie auch im Rücklauf die Temperatur von der Primär- zur Sekundärseite um den gleichen Betrag abfällt. Analog dazu ist die treibende Temperaturdifferenz beim Wärmetauscher 3a sowie beim verlustarmen Verteiler 3c.

Wird der Temperaturabfall nicht berücksichtigt, so ergibt sich nach Gleichung 11 ein zu geringer Wert für den Sekundärvolumenstrom $\dot{V}_{sec}$, weil die Spreizung überschätzt wird. Daher würde auch ein zu geringer Primärvolumenstrom $\dot{V}_{pri}$ eingeregelt. In der hydraulischen Weiche 3b würde dann die Temperatur durch den größeren Sekundärvolumenstrom heruntergemischt werden und es kommt zu einer Unterversorgung der Verbraucher 6.

Oftmals ist auch bei mindestens einem Heizkreis kein Mischer installiert, so dass der Temperaturabfall ständig gemessen werden kann.

Der Temperaturabfall $\Delta T_{pri-sec}$ wird vorzugsweise dadurch ermittelt, dass in einem mischerlosen Verbraucherkreis 5b (Figur 2) die Differenz zwischen der primären Vorlauftemperatur $T_{VL.pri}$ und der sekundären lokalen Vorlauftemperatur $T_{VL.sec,i}$ in diesem (i-ten) Verbraucherkreis 5b berechnet wird:

$$\Delta T_{pri-sec} = T_{VL.pri} - T_{VL.sec,i} \qquad (G15).$$

Denn bei einem mischerlosen Verbraucherkreis 5b ist die Sekundärvorlauftemperatur $T_{VL.sec}$ gleich der Temperatur $T_{VL.sec,i}$ im lokalen Vorlauf 10 des Verbraucherkreises 5a: $T_{VL.sec} = T_{VL.sec,i}$, so dass es nicht erforderlich ist, diese Sekundärvorlauftemperatur $T_{VL.sec}$ zu messen. Vielmehr kann die ohnehin vorhandene Messstelle hierzu verwendet werden. Das heißt, dass bei einem mischerlosen Verbraucherkreis 5b, wie er in Figur 2 ganz rechts beispielhaft gezeigt ist, jederzeit der Temperaturabfall $\Delta T_{pri-sec}$ über der Übergabestelle 3 im Vorlauf 15, 10 gemessen werden kann.

Alternativ oder zusätzlich kann der Temperaturabfall $\Delta T_{pri-sec}$ bei einem Rücklaufmedium in den Vorlauf mischenden Verbraucherkreis 5a ermittelt werden, indem bei voll geöffnetem Mischer 11, d.h. bei fehlender Zumischung von Rücklaufmedium in den lokalen Vorlauf, die Differenz zwischen der primären Vorlauftemperatur $T_{VL.pri}$ und der sekundären lokalen Vorlauftemperatur $T_{VL.consumer,i}$ hinter dem Mischer 11 in diesem Verbraucherkreis 5a berechnet wird:

$$\Delta T_{pri-sec} = T_{VL.pri} - T_{VL.consumer,i}, \text{ bei voll geöffnetem Mischer} \qquad (G16).$$

Denn bei einem voll geöffnetem Mischer 11 liegt die Sekundärvorlauftemperatur $T_{VL.sec}$ an der Messstelle im lokalen Vorlauf 10 des Verbraucherkreises 5a hinter dem Mischer 11 an $T_{VL.sec} = T_{VL.consumer,i,open\,valve}$, so dass es nicht erforderlich ist, diese Sekundärvorlauftemperatur $T_{VL.sec}$ zu messen, sondern die ohnehin vorhandene Messstelle hierzu verwendet werden kann. Das heißt, sobald ein Mischer 11 voll geöffnet ist, kann der Temperaturabfall $\Delta T_{pri-sec}$ über der Übergabestelle 3 im Vorlauf 15, 10 gemessen werden.

Dies muss jedoch nicht fortwährend erfolgen. Es genügt, wenn der Temperaturabfall $\Delta T_{pri-sec}$ zumindest ein Mal berechnet und abgespeichert wird. Da diese Berechnung auf Messwerten beruht, die ohnehin gemeinsam an einer der Auswertungsstellen vorliegen, d.h. vorzugsweise in der zu regelnden primären Kreiselpumpe 17, alternativ in der jeweiligen Verbraucherkreispumpe 12 oder in der zentralen Auswertungseinheit, wird dort lediglich noch die Information benötigt, wann der Mischer voll geöffnet ist. Liegt diese Information vor, wird Temperaturabfall $\Delta T_{pri-sec}$ aus der Differenz der dann vorliegenden Vorlauftemperaturen $T_{VL.pri}$ und $T_{VL.consumer,i}$ berechnet.

Die Bereitstellung der Information kann beispielsweise über ein entsprechendes Öffnungssignal vom Mischer 11 erfolgen. Das Öffnungssignal kann kabelgebunden oder per Funk zu der entsprechenden Auswertungsstelle übertragen werden. Hierzu kann eine entsprechende Meldeleitung zwischen Auswertungsstelle und Mischer 11 bestehen, oder der Mischer 11 verfügt über eine Kommunikationseinheit, die seine Anbindung an das Datennetzwerk 19 ermöglicht.

Vorzugsweise erfolgt die Ermittlung des Temperaturabfalls $\Delta T_{pri-sec}$ wiederholt in zeitlichen Abständen, insbesondere immer wieder, wenn ein Mischer 11 voll geöffnet ist. Dies hat den Vorteil, dass Korrekturen und Mittelwertbildungen des Temperaturabfalls $\Delta T_{pri-sec}$ möglich sind.

An dieser Stelle sei noch ergänzt, dass ein Einsetzen von G15 in G14 zu einem Korrekturwert $C_i = 1$ führt, d.h. bei voll geöffnetem Mischer mathematisch keine Korrektur des ermittelten Verbrauchervolumenstroms $\dot{V}_{consumer,i}$ erforderlich ist, weil er dem Verbraucherkreisvolumenstrom $\dot{V}_{sec,i}$ entspricht. Entsprechend ist in G11 für n=3 entsprechend Figur 2, 3 und 4 das $C_3 = 1$ gesetzt und in G12 nicht aufgeführt.

Da der Temperaturabfall $\Delta T_{pri\text{-}sec}$ über dem Vorlauf betraglich identisch ist wie der Temperaturabfall über dem Rücklauf, kann gemäß einer alternativen Ausführungsvariante der Temperaturabfall $\Delta T_{pri\text{-}sec}$ anstelle im Vorlauf im Rücklauf bestimmt werden. Denn es gilt analog zu Gleichung 15:

$$\Delta T_{pri-sec} = -\Delta T_{sec-pri} = -(T_{RL,sec} - T_{RL,pri}) \qquad (G17).$$

Hierfür ist jedoch mittels einem vierten Temperatursensor 26 die primärseitige Rücklauftemperatur $T_{RL,pri}$ zusätzlich zu messen. Die zentrale sekundärseitige Rücklauftemperatur $T_{RL,sec}$ im Sekundärkreis 4 kann entsprechend der Mischungsregel

$$T_{RL,sec} = \frac{\sum \left( \dot{V}_{sec,i} \cdot T_{RL,sec,i} \right)}{\sum \dot{V}_{sec,i}} \qquad (G18).$$

berechnet werden. Denn die verbraucherkreisspezifischen Rücklauftemperaturen $T_{RL,sec,i}$ sind aufgrund ihrer Messung mittels des zweiten Temperaturfühlers 34 bekannt und die verbraucherkreisspezifischen Volumenströme $\dot{V}_{sec,i}$ werden nach Gleichungen G6, G7 oder G11a ermittelt.

Erfindungsgemäß wird nun auch die Rücklauftemperatur $T_{RL,pri}$ im Primärkreis 2 gemessen, so dass all Größen in Gleichung G17 bekannt sind und diese zur Berechnung des Temperaturabfalls verwendet werden kann.

Wird als Übergabestelle 3 ein Wärmetauscher 3a verwendet, so können sich die im Primärkreis 2 und Sekundärkreis 4 zirkulierenden Medien unterscheiden. Gemäß Gleichung G5 ist bei dieser Medienverschiedenheit der Gewichtungsfaktor k ungleich 1. Da das zu verwendeten Heiz-/Kühlmedium oder die Medien beim Entwurf der Heizungs- oder Kühlanlage festgelegt wird/ werden, sind auch seine/ ihre Dichte(n) und spezifischen Wärmekapazität(en) grundsätzlich bekannt und können der Volumenstromregelung der primärseitigen Pumpe 17 als solche oder in Gestalt des bereits nach Gleichung G5 berechneten Gewichtungsfaktors k vorgegeben werden.

Alternativ hierzu kann erfindungsgemäß auch eine automatische Ermittlung des Gewichtungsfaktors k erfolgen. Da die Wärmeströme auf der Primär- und Sekundärseite gleich sein müssen (adiabate Übergabe) folgt aus Gleichung G1:

$$\frac{\rho_{sec} \cdot c_{p,sec}}{\rho_{pri} \cdot c_{p,pri}} = k = \frac{\dot{V}_{pri} \cdot \Delta T_{pri}}{\dot{V}_{sec} \cdot \Delta T_{sec}} \qquad (G19).$$

Dabei wird die Temperaturspreizung $\Delta T_{pri}$ und der Volumenstrom $\dot{V}_{pri}$ auf der Primärseite 2 der Übergabestelle 3 ermittelt, insbesondere gemessen, wie dies zuvor bereits ausführlich unter Verweis auf die verschiedenen Möglichkeiten beschrieben worden ist. So kann der primärseitige Volumenstrom $\dot{V}_{pri}$ vorzugsweise von einem in die zu regelnde Pumpe 17 integrierten Volumenstromsensor oder aus anderen Größen innerhalb der Pumpe 17 rechnerisch ermittelt werden. Zur Bestimmung der Temperaturspreizungen können der dritte 24 und vierte 26 Temperatursensor dienen, wobei vorzugsweise die Pumpenelektronik der zu regelnden primärseitigen Pumpe 17 die Differenz aus diesen Sensorwerten ermittelt.

Der Volumenstrom $\dot{V}_{sec}$ auf der Sekundärseite 4 kann erfindungsgemäß nach einer der zuvor beschriebenen Gleichungen G6, G7 oder G11a berechnet werden.

Darüber hinaus kann auch die Spreizung $\Delta T_{sec}$ auf der Sekundärseite 4, d.h. die Differenz zwischen der sekundärseitigen Vorlauftemperatur $T_{VL,sec}$ und der sekundärseitigen Rücklauftemperatur $T_{RL,sec}$ berechnet werden.

$$\Delta T_{sec} = T_{VL,sec} - T_{RL,sec} \qquad G(20)$$

Die sekundärseitige Rücklauftemperatur $T_{RL,sec}$ wird dabei vorzugsweise aus der Mischungsregel nach Gleichung G18 bestimmt. Die sekundärseitige Vorlauftemperatur $T_{VL,sec}$ kann aus der primärseitigen Vorlauftemperatur $T_{VL,pri}$ und dem Temperaturabfall $\Delta T_{pri\text{-}sec}$ über der Übergabestelle 3 berechnet werden:

$$T_{VL,sec} = T_{VL,pri} - \Delta T_{pri-sec} \qquad G(21)$$

Da die primärseitige Vorlauftemperatur $T_{VL,pri}$, wie zuvor beschrieben, auch für die primärseitige Temperaturspreizung $\Delta T_{sec}$ benötigt wird, liegt sie an dieser Stelle bereits vor und kann verwendet werden. Der Temperaturabfall $\Delta T_{pri-sec}$ kann auf einem der oben beschriebenen Wege mittels einer der Gleichungen 15 oder 16 oder 17 und 18 bestimmt werden.

Die vollständige Berechnungsvorschrift für den Gewichtungsfaktor k erhält man dann bei Berücksichtigung einer realen Übergabestelle (d.h. mit Temperaturabfall) und mit Mischerbehafteten Verbraucherkreisen 5a durch Einsetzen beispielsweise der Gleichungen G11a mit G14 und G16, und G21 mit G22, G18 und G16 in Gleichung G19:

$$k = \frac{\dot{V}_{pri} \cdot \Delta T_{pri}}{\dot{V}_{sec} \cdot \Delta T_{sec}} \text{ mit} \qquad (G19)$$

$$\dot{V}_{sec} = \sum_1^n \left( \dot{V}_{consumer,i} \cdot C_i \right) \text{ mit} \qquad (G11a)$$

$$C_i = \frac{T_{VL.consumer,i} - T_{RL.consumer,i}}{T_{VL.pri} - \Delta T_{pri-sec} - T_{RL.consumer,i}} \qquad (G14)$$

$$\Delta T_{sec} = T_{VL.pri} - \Delta T_{pri-sec} - T_{RL,sec} \qquad (G20+G21)$$

$$T_{RL,sec} = \frac{\sum \left( \dot{V}_{sec,i} \cdot T_{RL.sec,i} \right)}{\sum \dot{V}_{sec,i}} \qquad (G18)$$

$$\Delta T_{pri-sec} = T_{VL.pri} - T_{VL.consumer,i} \qquad (G16)$$

Auf eine geschachtelte Darstellung der Berechnungsvorschrift für den Gewichtungsfaktor k wird an dieser Stelle aus Gründen der Übersichtlichkeit und Lesbarkeit verzichtet. Gleichwohl kann die Berechnungsvorschrift als mathematisch in sich geschlossener Ausdruck dargestellt und berechnet werden.

Mit dem auf diese Weise softwaretechnisch bestimmbaren Faktor k kann dann der bei der primärseitigen Kreiselpumpe 17 einzuregelnde Soll-Volumenstrom $\dot{V}_{pri,soll}$ nach Gleichung 5 berechnet werden und entsprechend in der Pumpenregelung eingestellt werden.

Die in Figuren 1 und 2 im Primärkreis 2 dargestellte, zu regelnde Kreiselpumpe 17 kann eine Erzeugerpumpe 17b sein, wie sie in Figur 3, 4 oder 5 im Vorlauf 15 eines Erzeugers 18 dargestellt ist, oder eine Zubringerpumpe 17c sein, wie sie in Figur 4 im Vorlauf 35 eines Zubringerkreises 30 angeordnet ist. Natürlich können die Erzeugerpumpe 17b und die Zubringerpumpe 17c auch im entsprechenden Rücklauf angeordnet sein.

Gemäß einer in Figur 5 dargestellten Ausführungsvariante der Heizungsanlage 1 kann der Primärkreis 2 mehr als einen Erzeugerkreis 14 umfassen. In Figur 5 sind drei solcher Erzeugerkreise 14a, 14b dargestellt. Jeder Erzeugerkreis kann einen oder mehrere Erzeuger 18 umfassen, wenngleich in Figur 5 nur jeweils ein Erzeuger 18 pro Erzeugerkreis 14a, 14b dargestellt ist. Die Erzeuger stellen die Heiz- bzw. im Falle einer Kühlanlage Kühlleistung bereit.

Jedem Erzeugerkreis 14a, 14b ist eine Erzeugerpumpe 17a, 17b zugeordnet, die das Heizmedium im jeweiligen lokalen Vorlauf 20 antreibt und in den zentralen Vorlauf 15 fördert. Bei Heizungsanlage 1 dieser Art ist es nicht erforderlich, alle Erzeugerpumpen 17a, 17b zu regeln, bzw. identisch zu regeln. Vielmehr kann mit einem einzigen der Erzeugerkreise 14b die variierende, bedarfsweise anfallende Spitzenlast gedeckt und mit den übrigen Erzeugerkreisen 14a die Grundlast erbracht werden. Die Erzeuger 18 in diesen Kreisen 14a laufen mit maximaler thermischer Leistung. Entsprechendes gilt für deren Grundlastpumpen 17a. Nur die Pumpe 17b für den Spitzenlast-Erzeugerkreis 14b passt sich an die Schwankungen im verbraucherseitigen Volumenstrom an, um eine energieeffiziente Heizungspumpenregelung zu erreichen. Daher muss das erfindungsgemäße Verfahren auch nur auf diese Spitzenlastpumpe 17b angewendet werden, während die Grundlastpumpen 17a nicht oder anders geregelt sind.

Der Erzeuger 18 in dem Spitzenlast-Erzeugerkreis 14b moduliert seine thermische Leistung entsprechend der gewünschten zentralen primärseitigen Vorlauftemperatur $T_{VL,pri}$ oder der zentralen sekundärseitigen Vorlauftemperatur $T_{VL,sec}$, wobei sich die Spitzenlastpumpe 17b anpasst. Erreicht die thermische Leistung dabei eine Stellgrenze, ohne dass die gewünschte Vorlauftemperatur $T_{VL,pri}$ oder $T_{VL,sec}$ erreicht wird, muss ein Grundlast-Erzeugerkreis 14a einschließlich des oder der zugehörigen Erzeuger(s) und der zugehörigen Grundlastpumpe 17a abgeschaltet oder zugeschaltet werden.

Gemäß einer Ausführungsvariante des erfindungsgemäßen Verfahrens wird nun diejenige Erzeugerpumpe 17b, die dem eine Spitzenlast bedienenden Erzeugerkreis 14b zugeordnet ist, derart geregelt, dass der gesamte Volumenstrom $\dot{V}_{pri}$ auf der Primärseite 2 dem Volumenstrom $\dot{V}_{sec}$ auf der Sekundärseite 4 entspricht. Dies bedeutet, dass auch der Volumenstrom, der von der oder den Erzeugerpumpe(n) 17a, die einem eine Grundlast bedienenden Erzeugerkreis 14a zugeordnet ist/ sind, berücksichtigt werden muss. Die dem Spitzenlast bedienenden Erzeugerkreis 14b zugeordne Pumpe wird deshalb im Sinne der Erfindung auch Spitzenlastpumpe 17b, die dem oder den die Grundlast bedienenden Erzeugerkreis(en) 14a zugeordnete Pumpe oder Pumpen 17a werden Grudlastpumpen genannt.

Wird davon ausgegangen, dass eine Anzahl m Erzeugerkreise 14a, 14b vorhanden sind, denen der p-te Erzeugerkreis 14b die Spitzenlast bedient, die übrigen Erzeugerkreise die Grundlast, ergibt sich analog Gleichung G1:

$$\left( \sum_{i=1}^{p-1} \dot{V}_{pri,i} + \dot{V}_{pri,p} + \sum_{j=p+1}^{m} \dot{V}_{pri,j} \right) \cdot \rho_{pri} \cdot c_{p,pri} \overset{!}{=} \dot{V}_{sec} \cdot \rho_{sec} \cdot c_{p,sec} \qquad (G22)$$

Geeigneterweise stellt, wie bei den vorherigen Ausführungsbeispielen beschrieben, der Förderstrom $\dot{V}_{pri,p}$ der zu regelnden Pumpe 17b die Sollgröße der Regelung dar. Durch Umstellung von Gleichung G22 ergibt sich dann für diese Sollgröße der erfindungsgemäßen Volumenstromregelung:

$$\dot{V}_{pri,k,soll} \overset{!}{=} k \cdot \dot{V}_{sec} - \sum_{i=1}^{p-1} \dot{V}_{pri,i} - \sum_{j=p+1}^{m} \dot{V}_{pri,j} \quad \text{mit} \qquad (G23)$$

$$k = \frac{\rho_{sec} \cdot c_{p,sec}}{\rho_{pri} \cdot c_{p,pri}}$$

Somit unterscheidet sich die Berechnungsvorschrift für die Sollgröße $\dot{V}_{pri,k,soll}$ bei der Ausführungsvariante mit mehr als einem Erzeugerkreis 14 von derjenigen nach Gleichung G5 lediglich darin, dass die Volumenströme des oder der anderen Erzeugerkreise(s) 14, d.h. der Grundlastpumpen ebenfalls ermittelt und von dem ermittelten, gegebenenfalls gewichteten Volumenstrom $\dot{V}_{sec}$ der Sekundärseite 4 subtrahiert werden. Die Volumenströme der Erzeugerpumpen 14a, 14b können analog den vorherigen Beschreibungen messtechnisch oder rechenrisch ermittelt werden, entweder innerhalb der entsprechenden Pumpe oder außerhalb derselben, entweder mittels der Pumpe selbst oder mittels einer Volumenstrommesseinrichtung.

Die ermittelten Volumenströme der Grundlasterzeugerkreise 14a werden dann an die Spitzenlastpumpe 17b oder an eine andere Auswertungseinheit übermittelt, um den primärseitigen Sollvolumenstrom $\dot{V}_{pri,k,soll}$ für die zu regelnde Spitzenlastpumpe 17b zu bestimmen. Die Übermittlung kann per Funk oder wie in Figur 5 gezeigt, über die Datenleitungen 20 und das Datennetzwerk 19 erfolgen.

Die Berechnung des sekundären Volumenstroms $\dot{V}_{sec}$ in Gleichung G23 kann wie zuvor bei den übrigen Ausführungsvarianten insbesondere nach einer der Gleichungen G6, G7 oder G11a erfolgen, insbesondere auch für medienverschiedene Kreisläufe auf der Primär- 2 und Sekundärseite 4 gemäß Gleichung G19.

Gemäß einer anderen, nicht dargestellten Ausführungsvariante kann die variierende, bedarfsweise anfallende Spitzenlast mit zwei Erzeugerkreisen 14b gedeckt werden, wohingegen mit dem oder den übrigen Erzeugerkreis(en) 14a die Grundlast erbracht wird. Die Grundlast-Erzeuger 18 in diesem Kreis 14a laufen mit maximaler thermischer Leistung. Entsprechendes gilt für deren Grundlastpumpe 17a. Nur die Pumpen 17b der Spitzenlast-Erzeugerkreise 14b passen sich an die Schwankungen im verbraucherseitigen Volumenstrom an, um eine energieeffiziente Heizungspumpenregelung zu erreichen. Daher wird das erfindungsgemäße Verfahren bei dieser Ausführungsvariante (nur) auf diese Spitzenlastpumpen 17b angewendet, während die Grundlastpumpe 17a nicht oder anders geregelt sind. Es sind dann zwei erste primärseitige Umwälzpumpen vorhanden, die erfindungsgemäß geregelt werden.

Gemäß einer Ausführungsvariante des erfindungsgemäßen Verfahrens werden nun diejenigen Erzeugerpumpen 17b, die den eine Spitzenlast bedienenden Erzeugerkreisen 14b zugeordnet sind, derart geregelt, dass der gesamte Volumenstrom $\dot{V}_{pri}$ auf der Primärseite 2 dem gesamten Volumenstrom $\dot{V}_{sec}$ auf der Sekundärseite 4 entspricht.

Der Volumenstrom, der durch die Summe der eine Spitzenlast bedienenden Erzeugerkreise 14b gebildet ist, wird analog zu Gleichung G23 ermittelt und dieser Volumenstrom gleichmäßig oder in einem vorgegebenen Verhältnis auf die Spitzenlastpumpen 17b verteilt. Das Volumenstromverhältnis entspricht dabei dem Verhältnis der thermischen Leistungen der eine Spitzenlast bedienenden Erzeugerkreise.

Gemäß einer Weiterbildung einer der o.g. Ausführungsvarianten kann in dem Erzeugerkreis 14 oder kann in einem, mehreren oder allen Erzeugerkreisen 14a, 14b ein Mischer 21 in der primären Rücklaufleitung 16 oder primären lokalen Rücklaufleitung 19 angeordnet sein. Solche mischerbehafteten Erzeugerkreise 14a', 14b' sind in Figur 6 dargestellt, wobei hier sowohl die Grundlasterzeugerkreise als auch der Spitzenlasterzeugerkreis einen solchen Mischer 21 aufweisen.

Bei diesem Rücklaufmischer 21 wird Medium aus der lokalen Vorlaufleitung 10 der Rücklaufleitung 9 über die Mischleitung 22 beigemischt, um die Rücklauftemperatur anzuheben. Eine derartige Anordnung ist vor allem Heizungsanlagen sinnvoll, die auf der Primärseite einen Konstanttemperaturkessel 18 oder ein Blockheizkraftwerk besitzen. Auf derartige Erzeugerkreise 14a', 14b' können die zuvor beschrieben Zusammenhänge und Berechnungen analog angewendet werden.

Der erzeugerspezifische Primärvolumenstrom $\dot{V}_{pri,i}$ eines mischerbehafteten Erzeugerkreises 14a', 14b' kann in diesem Fall aus dem entsprechenden Erzeugerkreisvolumenstrom $\dot{V}_{producer,i}$ analog zu Gleichung G7 und darin eingesetzter Gleichung G10 errechnet werden, wie sich aus den Gleichungen G24a und G24b ergibt:

$$\dot{V}_{pri,i} = R_i \cdot \dot{V}_{producer,i} \text{ mit} \qquad\qquad \text{(G24a)}.$$

$$R_i = \frac{T_{VL,producer,i} - T_{RL,producer,i}}{T_{VL,producer,i} - T_{RL,pri}} \qquad\qquad \text{(G24b)}.$$

wobei

$\dot{V}_{pri,i}$      der aus dem i-ten Erzeugerkreis 14a', 14b' hineinfließende Erzeugerkreisvolumenstrom (Volumenstrom nach dem Rücklaufmischer 21),

$\dot{V}_{producer,i}$      der in dem i-ten Erzeugerkreis 14a', 14b' durch den oder die Erzeuger 18 fließende Erzeugervolumenstrom (Volumenstrom vor dem Rücklaufmischer 21),

$R_i$      ein erzeugerspezifischer Korrekturwert,

$T_{VL,producer,i}$      die Temperatur im primären lokalen Vorlauf 20 vor dem Abzweig zum Rücklaufmischer 21 im i-ten Erzeugerkreis 14a', 14b',

$T_{RL,producer,i}$      die Temperatur im primären lokalen Rücklauf 19 hinter dem Rücklaufmischer 21 im i-ten Erzeugerkreis 14a', 14b', und

$T_{RL,pri}$      die Temperatur im zentralen primären Rücklauf 16 ist.

Auf eine Darstellung der physikalischen Zusammenhänge wird an dieser verzichtet, da sie analog zu den Verbraucherkreisen mit Vorlaufmischer 11 sind. Daher kann auf die vorherigen Ausführungen zurückgegriffen werden.

Um den jeweiligen erzeugerspezifischen Korrekturwert nach Gleichung G24b berechnen zu können, sind die jeweiligen Temperaturen $T_{VL,producer,i}$ und $T_{RL,producer,i}$ der lokalen sekundären Vorlaufleitung 20 und der lokalen sekundären Rücklaufleitung 19 erforderlich. Diese werden erfindungsgemäß entsprechend ermittelt und an die Auswertungsstelle zur Berechnung des Sollvolumenstroms übermittelt, d.h. beispielsweise an die zu regelnde primäre Kreiselpumpe 17 bzw. Spitzenlastpumpe 17b oder eine externe Auswerteeinheit. Wie bei den anderen Ausführungsvarianten kann die Ermittlung durch Messen, berechnen aus anderen gemessenen Größen oder Schätzen aus Modellgrößen erfolgen. Und wie bei den anderen Ausführungsvarianten kann die Übermittlung per Funk oder kabelgebunden, insbesondere über Messleitungen 25 und das Datennetzwerk 19 erfolgen, das den Ermittlungsort mit der Auswertungsstelle kommunikationstechnisch verbindet.

Wie beispielhaft anhand Figur 6 ersichtlich ist, kann die Temperatur $T_{VL,producer,i}$ im primären lokalen Vorlauf 20 eines Erzeugerkreises 14a', 14b' vor dem Abzweig zum Rücklaufmischer 21 mittels Temperatursensor 37 gemessen und an die Pumpenelektronik der Erzeugerpumpe 17a, 17b dieses Erzeugerkreises übermittelt werden. Ferner kann die Temperatur $T_{RL,producer,i}$ im primären lokalen Rücklauf 20 eines Erzeugerkreises 14a', 14b' hinter dem Rücklaufmischer 21 mittels Temperatursensor 38 gemessen und an die Pumpenelektronik der Erzeugerpumpe 17a, 17b dieses Erzeugerkreises 14a', 14b' übermittelt werden. Der im lokalen Vorlauf 20 angeordnete Temperatursensor 37 kann in die entsprechende Erzeugerpumpe 17a, 17b integriert sein und sein Messsignal somit direkt an deren Pumpenelektronik übermitteln. Alternativ kann er, wie bei dem im lokalen Rücklauf 19 angeordneten Temperatursensor 38, über eine Messleitung 25 mit der Pumpenelektronik der besagten Pumpe 17a, 17b verbunden sein.

Wie in Figur 4 gezeigt, kann der Übergabestelle 3 zu den Verbraucherkreisen 4 ein Zubringerkreis 30 vorgeschaltet sein, um lange Distanzen und damit verbundene Druckverluste zu überwinden. Dieser Zubringerkreis 30 schließt direkt an die Primärseite der Übergabestelle 3 an und ist mit der Sekundärseite einer zweiten Übergabestelle 29 verbunden, welche an ihrer Primärseite wiederum an den Erzeugerkreis 14 anschließt. In dem Beispiel gemäß Figur 4 ist erzeugerseitig ein einziger Erzeugerkreis 14 vorhanden. Bei dieser Ausführungsvariante wird die im Zubringerkreis 30 angeordnete Zubringerpumpe 17c gemäß dem erfindungsgemäßen Verfahren geregelt, d.h. ihr Volumenstrom wird in Abhängigkeit der Summe der verbraucherspezifischen Volumenströme eingeregelt.

Für die im Erzeugerkreis 14 angeordnete Erzeugerpumpe 17b kann diese Volumenstromregelung ebenfalls angewendet werden. So kann auch diese Erzeugerpumpe in ihrem Volumenstrom in Abhängigkeit der Summe der verbraucherspezifischen Volumenströme eingeregelt werden. Dies kann auf zweierlei Weise erfolgen, nämlich direkt oder indirekt.

Gemäß dem direkten Weg kann die Erzeugerpumpe 17b den hierfür notwendigen Volumenstromsollwert mitgeteilt bekommen, beispielsweise entweder von der Zubringerpumpe 17c, die diesen Wert berechnet, oder von der zentralen Auswerteeinheit. Die Erzeugerpumpe 17b kann den Volumenstromsollwert jedoch auch selbst berechnen. Hierzu werden dann die dafür benötigten Volumenstrom- und Temperaturwerte aus den Verbraucherkreisen 5a, 5b und dem Zubringerkreis 30 entsprechend an die Erzeugerpumpe 17b übermittelt. In beiden Fällen brauchen im Erzeugerkreis 14 dann grundsätzlich keine Temperaturen ermittelt zu werden.

Gemäß dem indirekten Weg kann die Erzeugerpumpe so geregelt werden, dass ihr Volumenstrom auf den Ist-Volumenstrom der Zubringerpumpe 17c eingeregelt wird. Dieser Fall ist letztendlich so zu behandeln, als wenn der Zubringerkreis 30 ein einziger bzw. der einzige Verbraucherkreis wäre. Die zweite Übergabestelle 29 tritt dann aus regelungstechnischer Sicht an die Stelle der ersten Übergabestelle 3. In diesem Fall muss die Erzeugerpumpe 17b also nicht auf einen Summenvolumenstrom geregelt werden, sondern lediglich auf den einen Volumenstrom im Zubringerkreis, der bei Medienverschiedenheit gegebenenfalls durch den Gewichtungsfaktor k zu multiplizieren ist. Im Übrigen dieser Fall analog den vorgenannten Ausführungen und Gleichungen zu behandeln.

Dasselbe gilt für einen in den Figuren nicht dargestellten Fall, dass erzeugerseitig mehr als ein Erzeugerkreis 14 vorhanden ist. Wo bei den vorherigen Ausführungsbeispielen anhand von Figuren 5 und 6 erläutert, muss in diesem Fall nur eine Erzeugerpumpe 17b in ihrem Volumenstrom erfindungsgemäß geregelt werden, nämlich diejenige, die die Schwankungen in der thermischen Leistungsanforderung der Verbraucher bedient, während die übrigen Pumpen eine Grundlast bedienen. Diese Spitzenlastpumpe 17b kann ebenfalls entweder gemäß dem gesamten verbraucherseitigen Summenvolumenstrom geregelt werden oder gemäß dem einfachen zubringerseitigen Volumenstrom.

**Bezugszeichenliste**

| 1 | Heizungsanlage |
|---|---|
| 2 | Primärkreis zur ersten Übergabestelle |
| 2a | Primärkreis zur zweiten Übergabestelle |
| 3 | erste Übergabestelle |
| 3a | Gegenstromplattenwärmetauscher |
| 3b | hydraulische Weiche |
| 3c | verlustarmer Verteiler |
| 4 | Sekundärkreis |
| 5 | Verbraucherkreis |
| 6 | Verbraucher |
| 7 | zentrale sekundäre Vorlaufleitung |
| 8 | zentrale sekundäre Rücklaufsammelleitung |
| 9 | lokale sekundäre Vorlaufleitung |
| 10 | lokale sekundäre Rücklaufleitung |
| 11 | Mischer, Vorlaufmischer |
| 12 | Umwälzpumpe, Verbraucherkreispumpe |
| 13 | Ausdehnungsgefäß |
| 14 | Erzeugerkreis |
| 14a | Erzeugerkreis für Grundlast |
| 14b | Erzeugerkreis für Spitzenlast |
| 15 | primäre Vorlaufleitung |
| 16 | primäre Rücklaufleitung |
| 17 | Umwälzpumpe |
| 17a | Erzeugerpumpe für Grundlast |
| 17b | Erzeugerpumpe für Spitzenlast |
| 17c, 17d | Zubringerpumpe |

| 18 | Erzeuger/ Kessel |
|---|---|
| 19 | Datennetzwerk |
| 20 | Datenleitung |
| 21 | Mischer, Rücklaufmischer |
| 22 | Mischleitung |
| 23 | Bypass |
| 24 | Vorlauftemperaturfühler im Primärkreis |
| 25 | Temperaturmessleitung |
| 26 | Rücklauftemperaturfühler im Primärkreis |
| 28 | zentrale Kommunikationseinrichtung |
| 29 | zweite Übergabestelle |
| 30 | Zubringerkreis, Sekundärkreis zur ersten Übergabestelle |
| 31 | Vorlauftemperaturfühler im ersten Verbraucherkreis |
| 32 | Rücklauftemperaturfühler im ersten Verbraucherkreis |
| 33 | Vorlauftemperaturfühler im zweiten Verbraucherkreis |
| 34 | Rücklauftemperaturfühler im zweiten Verbraucherkreis |
| 35 | Vorlauf Zubringerkreis |
| 36 | Rücklauf Zubringerkreis |
| 37 | Vorlauftemperaturfühler im Zubringerkreis |
| 38 | Rücklauftemperaturfühler im Zubringerkreis |

**Patentansprüche**

1. Verfahren zur Regelung wenigstens einer ersten Umwälzpumpe (17b, 17c) einer Heizungs- oder Kühlungsanlage (1), die einen Primärkreis (2, 2a) und einen mit diesem an einer Übergabestelle (3, 29) gekoppelten Sekundärkreis (4, 30a) aufweist, wobei die erste Umwälzpumpe (17, 17b, 17c, 17b') ein Heiz- oder Kühlmedium im Primärkreis (2, 2a) fördert und im Sekundärkreis (4, 30a) zumindest eine zweite Umwälzpumpe (12, 17d) liegt, die ein Heiz- oder Kühlmedium in zumindest einem Teilbereich des Sekundärkreises (4, 30a) fördert, **dadurch gekennzeichnet, dass** der Volumenstrom ($\dot{V}_{pri}$, $\dot{V}_{pri,i}$) der ersten Umwälzpumpe (17, 17b, 17c, 17b') in funktionaler Abhängigkeit von dem fließenden Volumenstrom ($\dot{V}_{sec}$) des Sekundärkreises (4, 30) hinter der Übergabestelle (3, 29) geregelt wird, wobei der Sekundärkreis (4) eine Anzahl (n) parallel geschalteter Verbraucherkreise (5, 5a, 5b) aufweist, in denen jeweils wenigstens ein Verbraucher (6) die Wärme oder Kälte des Heiz- oder Kühlmediums verbraucht, und in denen jeweils eine mit dem entsprechenden Verbraucher (6) in Reihe liegende, autonom geregelte Verbraucherpumpe (12) das Heiz- oder Kühlmedium in dem entsprechenden Verbraucherkreis (5a, 5b) fördert, wobei in jedem der Verbraucherkreise (5a, 5b) der jeweilige Verbraucherkreisvolumenstrom ($\dot{V}_{sec,i}$) gemessen oder rechnerisch ermittelt wird, und diese Verbraucherkreisvolumenströme ($\dot{V}_{sec,i}$) zum Erhalt eines Gesamtvolumenstrom ($\dot{V}_{sec}$) des Sekundärkreises (4) addiert werden, und dass der Gesamtvolumenstrom ($\dot{V}_{sec}$) als Sollwert ($\dot{V}_{pri,soll}$, $\dot{V}_{pri,i,soll}$) bei der ersten Umwälzpumpe (17b, 17c) eingestellt wird oder daraus ein Sollwert ($\dot{V}_{pri,soll}$, $\dot{V}_{pri,i,soll}$) berechnet und bei der ersten Umwälzpumpe (17b, 17c) eingestellt wird.

2. Verfahren nach Anspruch 1, **dadurch gekennzeichnet, dass** die erste Umwälzpumpe (17, 17b, 17c, 17b') so geregelt wird, dass der Volumenstrom ($\dot{V}_{pri}$) des Primärkreises (2, 2a) vor der Übergabestelle (3, 29) in einem vorgegebenen Verhältnis (a) zu dem Volumenstrom ($\dot{V}_{sec}$) des Sekundärkreises (4, 30a) hinter der Übergabestelle (3, 29) steht, insbesondere dem Volumenstrom ($\dot{V}_{sec}$) des Sekundärkreises (4, 30a) hinter der Übergabestelle (3, 29) entspricht.

3. Verfahren nach Anspruch 1 oder 2, **dadurch gekennzeichnet, dass** die erste Umwälzpumpe (17, 17b, 17c, 17b') so geregelt wird, dass der Volumenstrom ($\dot{V}_{pri}$) des Primärkreises (2, 2a) vor der Übergabestelle (3, 29) einen vorgegebenen Abstand (b) zu dem Volumenstrom ($\dot{V}_{sec}$) des Sekundärkreises (4, 30) hinter der Übergabestelle (3, 29) oder zu einem daraus bestimmten Wert ($a \cdot \dot{V}_{sec}$) einhält.

4. Verfahren nach einem der vorherigen Ansprüche, **dadurch gekennzeichnet, dass** der Primärkreis (2, 2a) zumindest einen Erzeugerkreis (14, 14a, 14b, 14a', 14b') aufweist, in dem wenigstens ein Wärme- oder Kälteerzeuger (18) das Heiz- oder Kühlmedium aufheizt oder kühlt und eine mit dem Wärme- oder Kälteerzeuger (18) in Reihe liegende Erzeugerpumpe (17, 17a, 17b, 17a', 17b') das Heiz- oder Kühlmedium des Erzeugerkreises (14, 14a, 14b, 14a', 14b') fördert, wobei die zu regelnde, erste Umwälzpumpe (17, 17b, 17b') diese Erzeugerpumpe (17, 17b, 17b') ist.

5. Verfahren nach einem der vorherigen Ansprüche, **dadurch gekennzeichnet, dass** der Primärkreis (2, 2a) eine Anzahl (m) parallel geschalteter Erzeugerkreise (14, 14a, 14b, 14a', 14b') aufweist, in denen jeweils wenigstens ein Wärme- oder Kälteerzeuger (18) das Heiz- oder Kühlmedium aufheizt oder kühlt und jeweils eine mit dem entsprechenden Wärme- oder Kälteerzeuger (18) in Reihe liegende Erzeugerpumpe (17, 17a, 17b, 17a', 17b') einen erzeugerspezifischen Volumenstroms ($\dot{V}_{pri,i}$) fördert, wobei die zu regelnde erste Umwälzpumpe (17, 17b, 17b') eine dieser parallelen Erzeugerpumpen (17, 17b, 17b') ist.

6. Verfahren nach Anspruch 5, **dadurch gekennzeichnet, dass** die zu regelnde, erste Umwälzpumpe (17, 17b, 17b') diejenige Erzeugerpumpe (17, 17b, 17b') ist, die in einem eine Spitzenlast bedienenden Erzeugerkreis (14b) liegt.

7. Verfahren nach Anspruch 4, 5 oder 6, **dadurch gekennzeichnet, dass** der Erzeugerkreis oder die Erzeugerkreise (14, 14a, 14b, 14a', 14b') mittels der Übergabestelle (3) direkt mit dem Sekundärkreis (4) gekoppelt sind.

8. Verfahren nach Anspruch 1 bis 3, **dadurch gekennzeichnet, dass** der Primärkreis (2) einen Zubringerkreis (30) aufweist, der an der Übergabestelle (3) mit dem Sekundärkreis (4) gekoppelt ist, wobei in dem Zubringerkreis (30) eine Zubringerpumpe (17c) liegt, die ein Heiz- oder Kühlmedium im Zubringerkreis (30) fördert, und wobei die zu regelnde, erste Umwälzpumpe (17c) diese Zubringerpumpe (17c) ist.

9. Verfahren nach einem der Ansprüche 1 bis 7, **dadurch gekennzeichnet, dass** der Sekundärkreis (30a) einen Zubringerkreis (30a) aufweist oder bildet, der an der Übergabestelle (29) mit dem Primärkreis (2a) gekoppelt ist, wobei in dem Zubringerkreis (30a) eine Zubringerpumpe (17c) liegt, die ein Heiz- oder Kühlmedium im Zubringerkreis (30a) fördert, und wobei die zweite Umwälzpumpe (17d) diese Zubringerpumpe (17d) ist.

10. Verfahren nach einem der Ansprüche 4 bis 7, **dadurch gekennzeichnet, dass** der Primärkreis (2) einen Zubringerkreis (30) aufweist, der an der Übergabestelle (3) mit dem Sekundärkreis (4) gekoppelt ist und mittels einer zweiten Übergabestelle (29) mit dem oder den Erzeugerkreis(en) (14, 14a, 14b, 14a', 14b') gekoppelt ist, wobei in dem Zubringerkreis (30) eine Zubringerpumpe (17c) liegt, die ein Heiz- oder Kühlmedium im Zubringerkreis (30) fördert und eine weitere erste Umwälzpumpe (17) bildet, welche wie die eine erste Umwälzpumpe (17b) geregelt wird.

11. Verfahren nach einem der vorhergehenden Ansprüche, **dadurch gekennzeichnet, dass** bei verschiedenen Medien im Primärkreis (2) und Sekundärkreis (4) der Volumenstrom ($\dot{V}_{sec}$) des Sekundärkreises (4, 30a) mit einem Faktor (k) gewichtet wird, der dem Produkt aus den Dichteverhältnisse und Wärmekapazitätsverhältnissen der beiden Medien entspricht und dass dieser gewichtete Volumenstrom ($\dot{V}_{sec}$) als Sollwert ($\dot{V}_{pri,soll}$, $\dot{V}_{pri,i,soll}$) bei der ersten Umwälzpumpe (17b, 17c) eingestellt wird oder daraus ein Sollwert ($\dot{V}_{pri,soll}$, $\dot{V}_{pri,i,soll}$) für den Volumenstrom der ersten Umwälzpumpe (17b, 17c) berechnet und bei der ersten Umwälzpumpe (17b, 17c) eingestellt wird.

12. Verfahren nach einem der vorherigen Ansprüche, **dadurch gekennzeichnet, dass** in einem, zwei, mehreren oder allen Verbraucherkreisen (5a) ein bzw. jeweils ein Vorlaufmischer (11) angeordnet ist, der einem jeweiligen lokalen Vorlauf (10) des entsprechenden Verbraucherkreises (5) über eine Mischleitung (22) einen Teil des Heiz- oder Kühlmediums seines Rücklaufs (9) beimischt, und ein Verbrauchervolumenstrom ($\dot{V}_{consumer,i}$) in dem jeweiligen Verbraucherkreis (5a) in Strömungsrichtung hinter dem Vorlaufmischer (11) oder vor Abzweig der Mischleitung (22) ermittelt wird, und dieser jeweils ermittelte Verbrauchervolumenstrom ($\dot{V}_{consumer,i}$) zum Erhalt des jeweiligen Verbraucherkreisvolumenströme ($\dot{V}_{sec,i}$) mit einem verbraucherkreisspezifischen Korrekturwert (Ci) multipliziert wird.

13. Verfahren nach Anspruch 12, **dadurch gekennzeichnet, dass** der verbraucherkreisspezifische Korrekturwert (Ci) durch das Verhältnis aus einer ersten zu einer zweiten Temperaturdifferenz gebildet ist, wobei die erste Temperaturdifferenz die Differenz zwischen dem lokalen Vorlauf (10) hinter dem Vorlaufmischer (11) und dem lokalen Rücklauf (9) des entsprechenden Verbraucherkreises (5a) ist und die zweite Temperaturdifferenz die Differenz zwischen dem zentralen sekundärseitigen Vorlauf (7) oder primärseitigen Vorlauf (15) und dem lokalen Rücklauf (9) des entsprechenden Verbraucherkreises 5a ist.

14. Verfahren nach Anspruch 12, **dadurch gekennzeichnet, dass** der verbraucherkreisspezifische Korrekturwert (Ci) berechnet wird aus

$$C_i = \frac{T_{VL.consumer,i} - T_{RL.consumer,i}}{T_{VL.pri} - \Delta T_{pri-sec} - T_{RL.consumer,i}}$$

wobei

$C_i$ der verbraucherkreisspezifische Korrekturwert eines i-ten Verbraucherkreises (5a),

$T_{VL.consumer,i}$ Temperatur im lokalen Vorlauf (10) hinter dem Vorlaufmischer (11) des i-ten Verbraucherkreises (5a),

$T_{RL.consumer,i}$ Temperatur im lokalen Rücklauf (9) des i-ten Verbraucherkreises (5a),

$T_{VL.pri}$ die Temperatur im zentralen primärseitigen Vorlauf (15) und

$\Delta T_{pri-sec}$ der Temperaturabfall von der Primär- zur Sekundärseite der Übergabestelle (3) ist.

15. Verfahren nach Anspruch 14, **dadurch gekennzeichnet, dass** der Temperaturabfall ($\Delta T_{pri-sec}$) dadurch ermittelt wird, dass in einem vorlaufmischerlosen Verbraucherkreis (5b) die Differenz zwischen der primären Vorlauftemperatur ($T_{VL.pri}$) und der sekundären lokalen Vorlauftemperatur ($T_{VL.sec,i}$) berechnet wird, oder dass bei einem Rücklaufmedium in den Vorlauf (7) mischenden Verbraucherkreis (5a) bei voll geöffnetem Vorlaufmischer (11), die Differenz zwischen der primären Vorlauftemperatur ($T_{VL.pri}$) und der sekundären lokalen Vorlauftemperatur ($T_{VL.consumer,i}$) hinter dem Vorlaufmischer (11) berechnet wird.

16. Verfahren nach einem der Ansprüche 1 bis 13 oder 15, **dadurch gekennzeichnet, dass** die Verbraucherkreisvolumenströme ($\dot{V}_{sec,i}$) und/ oder Verbrauchervolumenströme ($\dot{V}_{consumer,i}$) innerhalb der Verbraucherpumpen (12) ermittelt werden.

17. Verfahren nach einem der vorherigen Ansprüche, **dadurch gekennzeichnet, dass** die ermittelten Verbraucherkreisvolumenströme ($\dot{V}_{sec,i}$) von den Verbraucherpumpen (12) an die erste Umwälzpumpe (17, 17b, 17c) und/ oder eine zentrale Auswerteeinheit (28) zur Berechnung des Volumenstromsollwerts ($\dot{V}_{pri,soll}$, $\dot{V}_{pri,i,soll}$) übermittelt werden.

18. Verfahren nach einem der Ansprüche 13 bis 17, **dadurch gekennzeichnet, dass** die Temperatur im lokalen Vorlauf (10) hinter dem Vorlaufmischer (11) und im lokalen Rücklauf (9) des entsprechenden Verbraucherkreises (5a) sowie die Temperatur im zentralen sekundärseitigen Vorlauf (7) oder primärseitigen Vorlauf (15) gemessen wird.

19. Verfahren nach einem der Ansprüche 13 bis 18, **dadurch gekennzeichnet, dass** die erste oder zweite Temperaturdifferenz berechnet und abgespeichert wird und jedes Mal aktualisiert wird, wenn der Vorlaufmischer (11) des entsprechenden Verbraucherkreises wieder vollständig in Durchflussrichtung zum Verbraucher geöffnet ist.

20. Verfahren nach Anspruch 11, **dadurch gekennzeichnet, dass** der Faktor (k) ermittelt wird aus der Temperaturspreizung ($\Delta T_{pri}$) und dem Volumenstrom ($\dot{V}_{pri}$) im Primärkreis (2) der Übergabestelle (3) sowie der Temperaturspreizung ($\Delta T_{sec}$) und dem Volumenstrom ($\dot{V}_{pri}$) im Sekundärkreis (4) gemäß der Gleichung

$$ k = \frac{\dot{V}_{pri} \cdot \Delta T_{pri}}{\dot{V}_{sec} \cdot \Delta T_{sec}} $$

wobei

$k$ der Gewichtsfaktor,

$\dot{V}_{pri}$ der gesamte Volumenstrom im Primärkreis (2),

$\dot{V}_{sec}$ der gesamte Volumenstrom im Sekundärkreis (4),

$\Delta T_{pri}$ die Temperaturspreizung auf der Primärseite der Übergabestelle (3) ist, und

$\Delta T_{sec}$ die Temperaturspreizung auf der Sekundärseite der Übergabestelle (3) ist.

21. Verfahren nach einem der Anspreche 5 bis 20, **dadurch gekennzeichnet, dass** die Erzeugerkreisvolumenströme ($\dot{V}_{pri,i}$) der Erzeugerumwälzpumpen (17a) aller eine thermische Grundlast erbringenden Erzeugerkreise (14a, 14a') jeweils ermittelt werden und deren Summe gebildet wird, und dass diese Summe von dem ermittelten sekundären Volumenstrom ($\dot{V}_{sec}$) subtrahiert wird und diese Differenz als Sollwert ($\dot{V}_{pri,i,soll}$) bei der ersten Umwälzpumpe (17b) eingestellt wird oder daraus ein Sollwert ($\dot{V}_{pri,i,soll}$) für den Volumenstrom der ersten Umwälzpumpe (17b) berechnet und bei der ersten Umwälzpumpe (17b) eingestellt wird.

22. Verfahren nach einem der Ansprüche 6 bis 21, **dadurch gekennzeichnet, dass** in einem, zwei, mehreren oder allen Erzeugerkreisen (14a') ein bzw. jeweils ein Rücklaufmischer (21) angeordnet ist, der einem jeweiligen lokalen Rücklauf (19) des entsprechenden Erzeugerkreises (5) über eine Mischleitung (22) einen Teil des Heiz- oder Kühlmediums seines Vorlaufs (20) beimischt, und ein Erzeugervolumenstrom ($\dot{V}_{producer,i}$) in dem jeweiligen Erzeugerkreis (14a') in Strömungsrichtung hinter dem Rücklaufmischer (11) oder vor Abzweig der Mischleitung (22) ermittelt wird, und dieser jeweils ermittelte Erzeugervolumenstrom ($\dot{V}_{producer,i}$) zum Erhalt des jeweiligen Erzeugerkreisvolumenstroms ($\dot{V}_{pri,i}$) mit einem erzeugerkreisspezifischen Korrekturwert ($R_i$) multipliziert wird.

23. Verfahren nach Anspruch 22, **dadurch gekennzeichnet, dass** der erzeugerkreisspezifische Korrekturwert ($R_i$) berechnet wird aus

$$R_i = \frac{T_{VL,producer,i} - T_{RL,producer,i}}{T_{VL,producer,i} - T_{RL,pri}} \qquad \text{(G24b).}$$

wobei

$R_i$ ein erzeugerspezifischer Korrekturwert,
$T_{VL,producer,i}$ die Temperatur im primären lokalen Vorlauf 20 im i-ten Erzeugerkreis 14a', 14b',
$T_{RL,producer,i}$ die Temperatur im primären lokalen Rücklauf 19 hinter dem Rücklaufmischer 21 im i-ten Erzeugerkreis14a', 14b', und
$T_{RL,pri}$ die Temperatur im zentralen primären Rücklauf 16 ist.

24. Verfahren nach Anspruch 21, 22 oder 23, **dadurch gekennzeichnet, dass** die Erzeugerkreisvolumenströme ($\dot{V}_{pri,i}$) oder Erzeugervolumenströme ($\dot{V}_{producer,i}$) innerhalb der Erzeugerumwälzpumpe (17a, 17b) des jeweiligen Erzeugerkreises (14a, 14b, 14a', 14b') ermittelt werden.

25. Verfahren nach einem der vorherigen Ansprüche, **dadurch gekennzeichnet, dass** die Übergabestelle (3) und/ oder die zweite Übergabestelle (29) ein Wärmetauscher (3a), eine hydraulische Weiche (3b) oder ein Verteiler (3c) ist, wobei der Verteiler (3c)die Vorlaufleitung (15) des Primärkreises (2) mit der zentralen Vorlaufleitung (7) des Sekundärkreises (4) direkt verbindet sowie die zentrale Rücklaufleitung (8) des Sekundärkreises (4) mit der Rücklaufleitung (16) des Primärkreises (2) direkt verbindet und die sekundäre zentrale Vorlauf- (7) und Rücklaufleitung (8) durch einen Bypass miteinander verbunden sind.

26. Umwälzpumpe (17b, 17c) zur Förderung eines Heiz- oder Kühlmediums in einem Primärkreis (2) einer Heizungs- oder Kühlungsanlage (1) mit einer Pumpenelektronik zur Bestimmung eines Sollwerts ($\dot{V}_{pri,soll}$, $\dot{V}_{pri,i,soll}$),**dadurch gekennzeichnet, dass** sie in ihrem Volumenstrom ($\dot{V}_{pri}$, $\dot{V}_{pri,i}$) regelbar und dazu eingerichtet ist, hierfür einen Volumenstromsollwert ($\dot{V}_{pri,soll}$, $\dot{V}_{pri,i,soll}$) in funktionaler Abhängigkeit von dem fließenden Volumenstrom ($\dot{V}_{sec}$, $\dot{V}_{sec,i}$) zumindest einer anderen Umwälzpumpe (12, 17d), zur bestimmungsgemäßen Förderung eines Heiz- oder Kühlmediums in einem Sekundärkreis (4) der Heizungs- oder Kühlungsanlage (1) selbst zu berechnen, indem sie Verbraucherkreisvolumenströme ($\dot{V}_{sec,i}$) zum Erhalt eines Gesamtvolumenstrom ($\dot{V}_{sec}$) des Sekundärkreises (4) addiert, der den Sollwert ($\dot{V}_{pri,soll}$, $\dot{V}_{pri,i,soll}$) bildet oder daraus der Sollwert ($\dot{V}_{pri,soll}$, $\dot{V}_{pri,i,soll}$) berechnet wird.

**Claims**

1. Method for controlling at least one first circulation pump (17b, 17c) of a heating or cooling system (1) having a primary circuit (2, 2a) and a secondary circuit (4, 30a) coupled therewith at a transfer point (3, 29), wherein the first circulation pump (17, 17b, 17c, 17b') conveys a heating or cooling medium in the primary circuit (2, 2a) and in the secondary circuit (4, 30a) at least one second circulation pump (12, 17d) is located that conveys a heating or cooling medium in at least one partial area of the secondary circuit (4, 30a), **characterized in that** the volume flow rate ($\dot{V}_{pri}$, $\dot{V}_{pri,i}$) of the first circulation pump (17, 17b, 17c, 17b') is controlled in functional dependence of the flowing volume flow rate ($\dot{V}_{sec}$) of the secondary circuit (4, 30) behind the transfer point (3, 29), wherein the secondary circuit (4) comprises a number (n) of consumer circuit(s) (5, 5a, 5b) connected in parallel, in which at least one consumer (6) consumes the respective heat or coolness from the heating or cooling medium, and in which an autonomously controlled consumer pump (12) in series with the respective consumer (6) conveys the heating or cooling medium in the respective consumer circuit (5a, 5b), wherein in each of the consumer circuits (5a, 5b) the respective consumer circuit volume flow rate ($\dot{V}_{sec,i}$) is measured or calculated and these consumer circuit volume flow rates ($\dot{V}_{sec,i}$) are added to obtain a total volume flow rate ($\dot{V}_{sec}$) of the secondary circuit (4) and **in that** the total volume flow rate ($\dot{V}_{sec}$) is set as a set point ($\dot{V}_{pri,soll}$, $\dot{V}_{pri,i,soll}$)

at the first circulation pump (17b, 17c) or a set point ($\dot{V}_{pri,soll}$, $\dot{V}_{pri,i,soll}$) is calculated from the total volume flow rate ($\dot{V}_{sec}$) and set at the first circulation pump (17, 17c).

2. Method according to claim 1, **characterized in that** the first circulation pump (17, 17b, 17c, 17b') is controlled in such a way that the volume flow rate ($\dot{V}_{pri}$) of the primary circuit (2, 2a) in front of the transfer point (3, 29) is in a predefined ratio (a) to the volume flow rate ($\dot{V}_{sec}$) of the secondary circuit (4, 30a) behind the transfer point (3, 29), in particular corresponds to the volume flow rate ($\dot{V}_{sec}$) of the secondary circuit (4. 30a) behind the transfer point (3, 29).

3. Method according to claim 1 or 2, **characterized in that** the first circulation pump (17, 17, 17c, 17b') is controlled in such a way that the volume flow rate ($\dot{V}_{pri}$) of the primary circuit (2, 2a) in front of the transfer point (3, 29) adheres to a predetermined distance (b) to the volume flow rate ($\dot{V}_{sec}$) of the secondary circuit (4, 30) behind the transfer point (3, 29) or to a value ($a \cdot \dot{V}_{sec}$) determined therefrom.

4. Method according to any one of the preceding claims, **characterized in that** the primary circuit (2, 2a) comprises at least one generator circuit (14, 14a, 14b, 14a', 14b') in which at least one heating or cooling generator heats or cools the heating or cooling medium and a generator pump (17, 17a, 17b, 17a', 17b') in sequence with the heating or cooling generator (18) which conveys heating or cooling medium of the generator circuit (14, 14a, 14b, 14a', 14b'), wherein the first circulation pump (17, 17b, 17b') to be controlled is this generator pump (17, 17b, 17b').

5. Method according to any one of the preceding claims, **characterized in that** the primary circuit (2, 2a) comprises a number (m) of generator circuits (14, 14a, 14b, 14a', 14b') connected in parallel, in which respectively at least one heating or cooling generator (18) respectively heats or cools the heating or cooling medium and a generator pump (17, 17a, 17b, 17a', 17b') in series with the respective heating or cooling generator (18) conveys a generator-specific volume flow rate ($\dot{V}_{pri,i}$), wherein the first circulation pump (17, 17b, 17b') to be controlled is one of these parallel generator pumps (17, 17b, 17b').

6. Method according to claim 5, **characterized in that** the first circulation pump (17, 17b, 17b') to be controlled is the generator pump (17, 17b, 17b') that lies in a peak load providing generator circuit (14b).

7. Method according to claim 4, 5 or 6, **characterized in that** the generator circuit or generator circuits (14, 14a, 14b, 14a', 14b') is/ are directly coupled to the secondary circuit (4) by means of the transfer point (3).

8. Method according to claims 1 to 3, **characterized in that** the primary circuit (2) comprises a feeder circuit (30) which is coupled with the secondary circuit (4) at the transfer point (3), wherein a feeder pump (17c) lies in the feeder circuit (30) which conveys a heating or cooling medium in the feeder circuit (30), and wherein the first circulation pump (17c) to be controlled is this feeder pump (17c).

9. Method according to any one of claim 1 to 7, **characterized in that** the secondary circuit (30a) comprises or forms a feeder circuit (30a) which is coupled to the primary circuit (2a) at the transfer point (29), wherein a feeder pump (17c) lies in the feeder circuit (30a), which conveys a heating or cooling medium in the feeder circuit (30a), and wherein the second circulation pump (17d) is this feeder pump (17d).

10. Method according to any one of claims 4 to 7, **characterized in that** the primary circuit (2) comprises a feeder circuit (30), which is coupled to the secondary circuit (4) at the transfer point (3) and is coupled to the generator circuit(s) (14, 14a, 14b, 14a', 14b') by means of a second transfer point (29), wherein a feeder pump (17c) lies in the feeder circuit (30), which conveys a heating or cooling medium in the feeder circuit (30) and forms a further first circulation pump (17), which is controlled in the same way as the one first circulation pump (17b).

11. Method according to any one of the preceding claims, **characterized in that** with different media in the primary circuit (2) and secondary circuit (4) the volume flow rate ($\dot{V}_{sec}$) of the secondary circuit (4, 30a) is weighted with a factor (k) which corresponds to the product of the density ratio and heat capacity ratio of the two media and **in that** this weighted volume flow rate ($\dot{V}_{sec}$) is selected as the set point ($\dot{V}_{pri,soll}$, $\dot{V}_{pri,i,soll}$) at the first circulation pump (17b, 17c) or calculated from a set point ($\dot{V}_{pri,soll}$, $\dot{V}_{pri,i,soll}$) for the volume flow rate of the first circulation pump (17b, 17c) and selected at the first circulation pump (17b, 17c).

12. Method according to any one of the preceding claims, **characterized in that** in one, two, a plurality or all consumer circuits (5a) one feed flow mixer or one feed flow mixer (11) in each is arranged which admixes to a respective local feed flow (10) of the corresponding consumer circuit (5) a part of the heating or cooling medium of its return flow (9) by means of a mixer line (22), and a consumer volume flow rate ($\dot{V}_{consumer,i}$) is determined in the respective consumer circuit (5a) in the flow direction behind the feed flow mixer (11) or in front of the branch to the mixer line (22), and this determined consumer volume flow rate ($\dot{V}_{consumer,i}$) is multiplied by a consumer circuit-specific compensation value (Ci) to obtain the respective consumer circuit volume flow rate $(\dot{V}_{sec,i})$.

13. Method according to claim 12, **characterized in that** the consumer circuit-specific compensation value (Ci) is formed by the ratio of a first to a second temperature difference, wherein the first temperature difference is between the local feed flow (10) behind the feed flow mixer (11) and the local return flow (9) of the respective consumer circuit (5a) and the second temperature difference is between the central secondary-side feed flow (7) or primary-side feed flow (15) and the local return flow (9) of the respective consumer circuit 5a.

14. Method according to claim 12, **characterized in that** the consumer circuit-specific compensation value (Ci) is calculated from

$$C_i = \frac{T_{VL.consumer,i} - T_{RL.consumer,i}}{T_{VL.pri} - \Delta T_{pri-sec} - T_{RL.consumer,i}}$$

wherein

$C_i$ is the consumer circuit-specific compensation value of an i-th consumer circuit (5a),
$T_{VL.consumer,i}$ is the temperature in the local feed flow (10) behind the feed flow mixer (11) of the ith consumer circuit (5a),
$T_{RL.consumer,i}$ is the temperature in the local return flow (9) of the ith consumer circuit (5a),
$T_{VL.pri}$ is the temperature in the central primary-side feed flow (15) and
$\Delta T_{pri-sec}$ is the temperature drop from the primary side to the secondary side of the transfer point (3).

15. Method according to claim 14, **characterized in that** the temperature drop ($\Delta T_{pri-sec}$) is determined **in that** in a consumer circuit (5b) without a feed flow mixer the difference between the primary feed flow temperature ($T_{VL.pri}$) and the secondary local feed flow temperature ($T_{VL.sec,i}$) is calculated, or **in that** in a consumer circuit (5a) that mixes a return flow medium into the feed flow (7) with a completely opened feed flow mixer (11), the difference between the primary feed flow temperature ($T_{VL.pri}$) and the secondary local feed flow temperature ($T_{VL.consumer,i}$) behind the feed flow mixer (11) is calculated.

16. Method according to one of the claims 1 to 13 or 15, **characterized in that** the consumer circuit volume flow rates ($\dot{V}_{sec,i}$) and/or consumer volume flow rates ($\dot{V}_{consumer,i}$) are determined inside the consumer pumps (12).

17. Method according to any one of the preceding claims, **characterized in that** the determined consumer circuit volume flow rates ($\dot{V}_{sec,i}$) are transmitted from the consumer pumps (12) to the first circulation pump (17, 17b, 17c) and/or a central evaluation unit (28) to calculate the volume flow rate set point $(\dot{V}_{pri,soll}, \dot{V}_{pri,i,soll})$.

18. Method according to any one of claims 13 to 17, **characterized in that** the temperature in the local feed flow (10) is measured behind the feed flow mixer (11) and in the local return flow (9) of the respective consumer circuit (5a) as well as the temperature in the central secondary-side feed flow (7) or the primary-side feed flow (15).

19. Method according to any one of claims 13 to 18, **characterized in that** the first or second temperature difference is calculated and saved and is updated each time if the feed flow mixer (11) of the respective consumer circuit is completely opened again in the through flow direction to the consumer.

20. Method according to claim 11, **characterized in that** the factor (k) is determined from the temperature spread ($\Delta T_{pri}$) and the volume flow rate ($\dot{V}_{pri}$) in the primary circuit (2) of the transfer point (3) as well as the temperature spread ($\Delta T_{sec}$) and the volume flow rate ($\dot{V}_{pri}$) in the secondary circuit (4) according to the equation

$$k = \frac{\dot{V}_{pri} \cdot \Delta T_{pri}}{\dot{V}_{sec} \cdot \Delta T_{sec}}$$

wherein

$k$ is the weight factor,
$\dot{V}_{pri}$ is the total volume flow rate in the primary circuit (2),
$\dot{V}_{sec}$ is the total volume flow rate in the secondary circuit (4),
$\Delta T_{pri}$ is the temperature spread on the primary side of the transfer point (3), and
$\Delta T_{sec}$ is the temperature spread on the secondary side of the transfer point (3).

21. Method according to any one of claims 5 to 20, **characterized in that** the generator circuit volume flow rates ($\dot{V}_{pri,i}$) of the generator circulation pumps (17a) of all generator circuits (14a, 14a') providing a thermal base load are each determined and the sum of which is provided, and **in that** this sum is subtracted from the determined secondary volume flow rate ($\dot{V}_{sec}$) and this difference is selected as a set point ($\dot{V}_{pri,i,soll}$) at the first circulation pump (17b) or it is calculated from said difference a set point ($\dot{V}_{pri,i,soll}$) for the volume flow rate of the first circulation pump (17b) and selected at the first circulation pump (17b).

22. Method according to any one of claims 6 to 21, **characterized in that** in one, two, a plurality or all generator circuits (14a') one return flow mixer or one return flow mixer (21) in each is arranged which admixes to a respective local return flow (19) of the corresponding generator circuit (5) a part of the heating or cooling medium of its feed flow (20) by means of a mixer line (22), and a generator volume flow rate ($\dot{V}_{producer,i}$) is determined in the respective generator circuit (14a') in the flow direction behind the return flow mixer (11) or in front of the branch to the mixer line (22), and this determined generator volume flow rate ($\dot{V}_{producer,i}$) is multiplied by a generator circuit-specific compensation value ($R_i$) to obtain the respective generator circuit volume flow rate ($\dot{V}_{pri,i}$).

23. Method according to claim 22, **characterized in that** the generator circuit-specific compensation value ($R_i$) is calculated from

$$R_i = \frac{T_{VL,producer,i} - T_{RL,producer,i}}{T_{VL,producer,i} - T_{RL,pri}} \qquad \text{(G24b)}.$$

wherein

$R_i$ is a generator-specific compensation value,
$T_{VL,producer,i}$ is the temperature in the primary local feed flow 20 in the i-th generator circuit 14a', 14b',
$T_{RL,producer,i}$ is the temperature in the primary local return flow 19 behind the return flow mixer 21 in the i-th generator circuit 14a', 14b' and
$T_{RL,pri}$ is the temperature in the central primary-side return flow 16.

24. Method according to claim 21, 22 or 23, **characterized in that** the generator circuit volume flow rates ($\dot{V}_{pri,i}$) or generator volume flow rates ($\dot{V}_{producer,i}$) are determined inside the generator circulation pump (14a, 17b) of the corresponding generator circuit (14a, 14b, 14a', 14b').

25. Method according to any one of the preceding claims, **characterized in that** the transfer point (3) and/or the second transfer point (29) is a heat exchanger (3a), a hydraulic separator (3b) or a distributor (3c), wherein the distributor (3c) directly connects the feed flow line (7) of the primary circuit (2) to the central feed flow line (7) of the secondary circuit (4) and also directly connects the central return line (8) of the secondary circuit (4) to the return line (16) of the primary circuit (2) and the secondary central feed flow line (7) and return line (8) are directly connected to one another by means of a bypass.

26. Circulation pump (17b, 17c) for conveying a heating or cooling medium in a primary circuit (2) of a heating or cooling system (1) with a pump electronics system for determining a set point ($\dot{V}_{pri,soll}$, $\dot{V}_{pri,i,soll}$), **characterized in that** it is controllable in its volume flow rate ($\dot{V}_{pri}$, $\dot{V}_{pri,i}$) and, for that, it is configured to calculate a volume flow set point ($\dot{V}_{pri,soll}$, $\dot{V}_{pri,i,soll}$) itself in functional dependence of the flowing volume flow rate ($\dot{V}_{sec}$, $\dot{V}_{sec,i}$) of at least one other circulation pump (12, 17d) for the intended conveying of a heating or cooling medium in a secondary circuit (4) of the heating or cooling system (1) by adding consumer circuit volume flow rates ($\dot{V}_{sec,i}$) to obtain a total volume flow rate ($\dot{V}_{sec}$) of the secondary circuit (4) that forms the set point ($\dot{V}_{pri,soll}$, $\dot{V}_{pri,i,soll}$) or the set point ($\dot{V}_{pri,soll}$, $\dot{V}_{pri,i,soll}$) is calculated from the total volume flow rate ($\dot{V}_{sec}$).

**Revendications**

1. Procédé de régulation d'au moins un premier circulateur (17b, 17c) d'une installation de chauffage ou de refroidissement (1), présentant un circuit primaire (2, 2a) et un circuit secondaire (4, 30a) couplé au premier au niveau d'un point de transition (3, 29), sachant que le premier circulateur (17, 17b, 17c, 17b') refoule un fluide de chauffage ou de refroidissement dans le circuit primaire (2, 2a) et que dans le circuit secondaire (4, 30a) contient au moins un deuxième circulateur (12, 17d) refoulant un fluide de chauffage ou de refroidissement dans au moins une partie du circuit secondaire (4, 30a), **caractérisé en ce que** le débit volumétrique ($\dot{V}_{pri}$, $\dot{V}_{pri,i}$) du premier circulateur (17, 17b, 17c, 17b') est régulé en dépendance fonctionnelle du débit volumétrique circulant ($\dot{V}_{sec}$) du circuit secondaire (4, 30) en aval du point de transition (3, 29), sachant que le circuit secondaire (4) comprends un nombre (n) de circuits consommateurs (5, 5a, 5b) montés en parallèle dans lesquels au moins un consommateur (6) absorbe la chaleur ou le froid du fluide de chauffage ou de refroidissement et dans lesquels à chaque consommateur (6) est associée une pompe consommatrice (12) monté en ligne et régulée de façon autonome qui refoule le fluide de chauffage ou de refroidissement dans le circuit consommateur (5a, 5b) correspondant, sachant que dans chaque circuit consommateur (5a, 5b) le débit volumétrique du circuit consommateur respectif ($\dot{V}_{sec,i}$) est mesuré ou calculé, et que ces débit volumétriques de circuit consommateur ($\dot{V}_{sec,i}$) sont ajoutés pour obtenir le débit volumétrique total ($\dot{V}_{sec}$) du circuit secondaire (4), et que le débit volumétrique total ($\dot{V}_{sec}$) est réglé comme point de consigne ($\dot{V}_{pri,soll}$, $\dot{V}_{pri,i,soll}$) sur le premier circulateur (17b, 17c) ou un point de consigne ($\dot{V}_{pri,soll}$, $\dot{V}_{pri,i,soll}$) est calculé à partir du débit volumique total ($\dot{V}_{sec}$) et réglé sur le premier circulateur (17b, 17c).

2. Procédé selon la revendication 1, **caractérisé en ce que** le premier circulateur (17, 17b, 17c, 17b') est régulé de telle façon que le débit volumétrique (($\dot{V}_{pri}$) du circuit primaire (2, 2a) en amont du point de transition (3, 29) est régulé selon un rapport prédéfini (a) par rapport au débit volumétrique ($\dot{V}_{sec}$) du circuit secondaire (4, 30a) en aval du point de transition (3, 29), et correspond en particulier au débit volumétrique ($\dot{V}_{sec}$) du circuit secondaire (4, 30a) en aval du point de transition (3, 29).

3. Procédé selon la revendication 1 ou 2, **caractérisé en ce que** le premier circulateur (17, 17b, 17c, 17b') est régulé de telle façon que le débit volumétrique (($\dot{V}_{pri}$) du circuit primaire (2, 2a) en amont du point de transition (3, 29) maintient une différence prédéfinie (b) par rapport au débit volumétrique ($\dot{V}_{sec}$) du circuit secondaire (4, 30) en aval du point de transition (3, 29) ou par rapport à une valeur ($a \cdot \dot{V}_{sec}$) calculée en fonction de ce dernier.

4. Procédé selon l'une des revendications précédentes, **caractérisé en ce que** le circuit primaire (2, 2a) présente au moins un circuit producteur (14, 14a, 14b, 14a', 14b') dans lequel au moins un générateur de chaleur et de froid (18) chauffe ou refroidit le fluide de chauffage ou de refroidissement et une pompe de production (17, 17a, 17b, 17a', 17b') en ligne avec le générateur de chaleur et de froid (18) refoule le fluide de chauffage ou de refroidissement (14, 14a, 14b, 14a', 14b') du circuit producteur, sachant que le premier circulateur à réguler (17, 17b, 17b') est cette pompe de circulation (17, 17b, 17b').

5. Procédé selon l'une des revendications précédentes, **caractérisé en ce que** le circuit primaire (2, 2a) présente un nombre (m) de circuits producteurs en parallèle (14, 14a, 14b, 14a', 14b') dans lesquels au moins un générateur de chaleur ou de froid (18) chauffe ou refroidit le fluide de chauffage ou de refroidissement et pour chacun une pompe productrice (17, 17a, 17b, 17a', 17b') en ligne avec le générateur de chaleur ou de froid (18) refoule un débit volumétrique spécifique au producteur($\dot{V}_{pri,i}$) , sachant que le premier circulateur à réguler (17, 17b, 17b') est cette pompe productrice en parallèle (17, 17b, 17b').

6. Procédé selon la revendication 5, **caractérisé en ce que** le premier circulateur à réguler (17, 17b, 17b') est la pompe de production (17, 17b, 17b') intégrée à un circuit producteur (14b) assumant une charge de pointe.

7. Procédé selon les revendications 4, 5 ou 6, **caractérisé en ce que** le ou les circuits producteurs (14, 14a, 14b, 14a', 14b') sont directement couplés au circuit secondaire (4) par le point de transition (3).

8. Procédé selon les revendications 1 à 3, **caractérisé en ce que** le circuit primaire (2) présente un circuit d'alimentation (30) couplé au niveau du point de transition (3) avec le circuit secondaire (4), sachant que dans le circuit d'alimentation (30) est placée une pompe d'alimentation (17c) refoulant un fluide de chauffage ou de refroidissement dans le circuit d'alimentation (30) et que le premier circulateur (17c) à réguler est cette pompe d'alimentation (17c).

9. Procédé selon l'une des revendications 1 à 7, **caractérisé en ce que** le circuit secondaire (30a) présente ou forme un circuit d'alimentation (30a) couplé au niveau du point de transition (29) avec le circuit primaire (2a), sachant que dans le circuit d'alimentation (30a) est placée une pompe d'alimentation (17c) refoulant un fluide de chauffage ou de refroidissement dans le circuit d'alimentation (30a) et que le deuxième circulateur (17d) est cette pompe d'alimentation (17d).

10. Procédé selon les revendications 4 à 7, **caractérisé en ce que** le circuit primaire (2) présente un circuit d'alimentation (30) couplé au niveau du point de transition (3) avec le circuit secondaire (4) et est couplé, au moyen d'un deuxième point de transition (29) avec le ou les circuits producteurs (14, 14a, 14b, 14a', 14b'), sachant que le circuit d'alimentation (30) contient une pompe d'alimentation (17c) refoulant un fluide de chauffage ou de refroidissement dans le circuit d'alimentation (30) et forme un autre premier circulateur (17) régulé comme un premier circulateur (17b).

11. Procédé selon l'une des revendications précédentes, **caractérisé en ce que** pour les différents fluides dans le circuit primaire (2) et le circuit secondaire (4), le débit volumétrique ($\dot{V}_{sec}$) du circuit secondaire (4, 30a) est pondéré d'un facteur (k) correspondant au produit des rapports de densité et des rapports de capacité calorifique des deux fluides et que ce débit volumétrique pondéré ($\dot{V}_{sec}$) est réglé comme valeur nominale ($\dot{V}_{pri,soll}$, $\dot{V}_{pri,i,soll}$) sur le premier circulateur (17b, 17c) ou qu'il sert à calculer et à régler sur le premier circulateur (17b, 17c) une valeur nominale ($\dot{V}_{pri,soll}$, $\dot{V}_{pri,i,soll}$) pour le débit volumétrique du premier circulateur (17b, 17c).

12. Procédé selon l'une des revendications précédentes, **caractérisé en ce qu'un,** plusieurs ou tous les circuits consommateurs (5a) contiennent chacun un mélangeur de départ (11) mélangeant une partie du fluide de chauffage ou de refroidissement de son retour (9) au départ local respectif (10) du circuit consommateur correspondant (5) au travers d'une conduite de mélange (22), et qu'un débit volumétrique de consommateur ($\dot{V}_{consumer,i}$) est déterminé dans le circuit consommateur (5a) dans le sens de l'écoulement en aval du mélangeur de départ (11) ou avant l'embranchement de la conduite de mélange (22) et que ce débit volumétrique de consommateur ($\dot{V}_{consumer,i}$)) est, pour calculer les débits volumétriques de consommateur ($\dot{V}_{sec,i}$), multiplié par une valeur de correction spécifique au circuit consommateur (Ci).

13. Procédé selon la revendication 12, **caractérisé en ce que** la valeur de correction spécifique au circuit consommateur (Ci) est calculée à partir du rapport de deux différences de température, la première étant la différence de température entre le départ local (10) en naval du mélangeur de départ (11) et le retour local (9) du circuit consommateur correspondant (5a) et la deuxième la différence de température entre le départ côté secondaire (7) ou côté primaire (15) et le retour local (9) du circuit consommateur correspondant 5a.

14. Procédé selon la revendication 15, **caractérisé en ce que** la valeur de correction spécifique au circuit consommateur (Ci) est calculée à partir de

$$C_i = \frac{T_{VL.consumer,i} - T_{RL.consumer,i}}{T_{VL.pri} - \Delta T_{pri-sec} - T_{RL.consumer,i}}$$

avec

$C_i$ valeur de correction spécifique au circuit consommateur d'un i-ème circuit consommateur (5a),
$T_{VL.consumer,i}$ température dans le départ local (10) en aval du mélangeur de départ (11) du i-ème circuit consommateur (5a),
$T_{RL.consumer,i}$ température dans le retour local (9) du i-ème circuit consommateur (5a),
$T_{VL.pri}$ température dans le départ central côté primaire (15) et
$\Delta T_{pri-sec}$ la baisse de température entre le côté primaire et le côté secondaire du point de transition (3).

15. Procédé selon la revendication 14, **caractérisé en ce que** la baisse de température ($\Delta T_{pri-sec}$) est déterminée en calculant, dans un circuit consommateur sans mélangeur de départ (5b), la différence entre la température de départ primaire ($T_{VL.pri}$) et la température de départ secondaire locale ($T_{VL.sec,i}$) ou en calculant, pour un circuit consommateur (5a) mélangeant un fluide de retour dans le départ (7) avec mélangeur de départ complètement ouvert (11), la différence entre la température de départ primaire ($T_{VL.pri}$) et la température de départ locale secondaire ($T_{VL.consumer,i}$) en aval du mélangeur de départ (11).

16. Procédé selon l'une des revendications 1 à 13 ou 15, **caractérisé en ce que** les débits volumétriques de circuit

consommateur ($\dot{V}_{sec,i}$) et/ou les débits volumétriques de consommateur ($\dot{V}_{consumer,i}$) sont déterminés à l'intérieur des pompes consommatrices (12).

17. Procédé selon l'une des revendications précédentes, **caractérisé en ce que** les débits volumétriques de circuit consommateur ($\dot{V}_{sec,i}$) déterminés dans les pompes consommatrices (12) sont transmis au premier circulateur (17, 17b, 17c) et/ou à un dispositif d'analyse central (28) pour la calcul du débit volumétrique ($\dot{V}_{pri,soll}$, $\dot{V}_{pri,i,soll}$) .

18. Procédé selon l'une des revendications 13 à 17, **caractérisé en ce que** sont mesurées la température dans le départ local (10) en aval du mélangeur de départ (11) et dans le retour local (9) du circuit consommateur correspondant (5a) ainsi que la température dans le départ côté secondaire (7) ou côté primaire (15) central.

19. Procédé selon l'une des revendications 13 à 18, **caractérisé en ce que** la première ou la seconde différence de température est calculée, enregistrée et actualisée à chaque fois que le mélangeur de départ (11) du circuit consommateur correspondant est complètement ouvert dans le sens d'écoulement vers le consommateur.

20. Procédé selon la revendication 11, **caractérisé en ce que le** facteur (k) est déterminé à partir de la différence de température ($\Delta T_{pri}$) et le débit volumétrique ($\dot{V}_{pri}$) dans le circuit primaire (2) du point de transition (3) ainsi que la différence de température ($\Delta T_{sec}$) et le débit volumétrique ($\dot{V}_{pri}$) dans le circuit secondaire (4) selon l'équation

$$k = \frac{\dot{V}_{pri} \cdot \Delta T_{pri}}{\dot{V}_{sec} \cdot \Delta T_{sec}}$$

avec

$k$ facteur de pondération,
$\dot{V}_{pri}$ débit volumétrique total dans le circuit primaire (2),
$\dot{V}_{sec}$ débit volumétrique total dans le circuit secondaire (4),
$\Delta T_{pri}$ différence de température côté primaire du point de transition (3)
$\Delta T_{sec}$ différence de température côté secondaire du point de transition (3)

21. Procédé selon l'une des revendications 5 à 20, **caractérisé en ce que** les débits volumétriques de circuit producteur ($\dot{V}_{pri,i}$) des circulateurs producteurs (17a) de chacun des circuits producteurs générant une charge de base thermique (14a, 14a') sont déterminés et ajoutés et que de la somme obtenue est soustrait du débit volumétrique secondaire déterminé ($\dot{V}_{sec}$) et que cette différence est réglée comme valeur nominale ($\dot{V}_{pri,i,soll}$) sur le premier circulateur (17b) ou qu'elle sert à calculer une valeur nominale ($\dot{V}_{pri,i,soll}$) pour le débit volumétrique du premier circulateur (17b) réglée sur le premier circulateur (17b).

22. Procédé selon l'une des revendications 6 à 21, **caractérisé en ce qu'un,** plusieurs ou tous les circuits producteurs (14a') contiennent chacun un mélangeur de retour (21) mélangeant une partie du fluide de chauffage ou de refroidissement de son retour (20) au retour local respectif (19) du circuit producteur correspondant (5) au travers d'une conduite de mélange (22), et qu'un débit volumétrique de producteur (($\dot{V}_{producer,i}$) est déterminé dans le circuit producteur respectif (14a') dans le sens de l'écoulement en aval du mélangeur de retour (11) ou avant l'embranchement de la conduite de mélange (22) et que ce débit volumétrique de producteur ($\dot{V}_{producer,i}$) est, pour calculer le débit volumétrique de producteur respectif ($V_{pri,i}$), multiplié par une valeur de correction spécifique au circuit producteur ($R_i$).

23. Procédé selon la revendication 22, **caractérisé en ce que** la valeur de correction spécifique au circuit producteur ($R_i$) est calculée à partir de

$$R_i = \frac{T_{VL,producer,i} - T_{RL,producer,i}}{T_{VL,producer,i} - T_{RL,pri}} \qquad \text{(G24b).}$$

avec

$R_i$ valeur de correction spécifique au producteur,

$T_{VL,producer,i}$ température dans le départ local primaire 20 dans le i-ème circuit producteur 14a', 14b',

$T_{RL,producer,i}$ température dans le retour local primaire 19 en aval du mélangeur de retour 21 dans le i-ème circuit producteur 14a', 14b', et

$T_{RL,pri}$ la température dans le retour primaire central 16.

24. Procédé selon la revendication 21, 22 ou 23, **caractérisé en ce que** sont déterminés les débits volumétriques de circuit producteur ($\dot{V}_{pri,i}$) pour les débit volumétriques de producteur ($\dot{V}_{producer,i}$) dans le circulateur producteur (17a, 17b) du circuit producteur respectif (14a, 14b, 14a', 14b').

25. Procédé selon l'une des revendications précédentes, **caractérisé en ce que** le point de transition (3) et/ou le second point de transition (29) sont un échangeur thermique (3a), un séparateur hydraulique (3b) ou un distributeur (3c), sachant que le distributeur (3c) relie directement la conduite de départ (15) du circuit primaire (2) à la conduite de départ centrale (7) du circuit secondaire (4) et relie directement la conduite de retour centrale (8) du circuit secondaire (4) à la conduite de retour (16) du circuit primaire (2) et les conduites de départ (7) et de retour (8) centrales sont reliées par un bypass.

26. Circulateur (17b, 17c) de transport d'un fluide de chauffage ou de refroidissement dans un circuit primaire (2) d'une installation de chauffage ou de refroidissement (1) avec une électronique de pompe destinée à déterminer une consigne ($\dot{V}_{pri,soll}$, $\dot{V}_{pri,i,soll}$), **caractérisé en ce qu'il** peut être réglé au niveau de son débit volumétrique ($\dot{V}_{pri}$, $\dot{V}_{pri,i}$) et configuré pour calculer dans ce but de façon autonome une valeur consigne ($\dot{V}_{pri,soll}$, $\dot{V}_{pri,i,soll}$) de débit volumétrique dépendant fonctionnellement du débit volumétrique courant ($\dot{V}_{sec}$, $\dot{V}_{sec,i}$) d'au moins un autre circulateur (12, 17d) destiné à transporter de façon conforme un fluide de chauffage ou de refroidissement dans un circuit secondaire (4) d'une installation de chauffage ou de refroidissement (1) en additionnant les débits volumétriques ($\dot{V}_{sec,i}$) des circuits consommateurs pour obtenir un débit volumétrique total ($\dot{V}_{sec}$) du circuit secondaire (4) qui constitue la valeur de consigne ($\dot{V}_{pri,soll}$, $\dot{V}_{pri,i,soll}$), ou en calculant la valeur de consigne ($\dot{V}_{pri,soll}$, $\dot{V}_{pri,i,soll}$) à partir du débit volumétrique total ($\dot{V}_{sec}$).

Fig. 1

Fig. 2

EP 3 374 699 B2

Fig. 3

**Fig. 4**

**Fig. 5**

Fig. 6

Fig. 7

**Fig. 8**

EP 3 374 699 B2

EP 3 374 699 B2

$\dot{V}$pri  $\dot{V}$sec

3a

Fig. 9

$\dot{V}$pri  $\dot{V}$sec

3b

Fig. 10

$\dot{V}$sec,1  $\dot{V}$sec,2  $\dot{V}$sec,3

$\dot{V}$pri

7

8

23

3c

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009017423 A1